(19) Europäisches Patentamt
European Patent Office
Office européen des brevets

(11) **EP 4 383 760 A1**

(12) **EUROPEAN PATENT APPLICATION**

(43) Date of publication:
**12.06.2024 Bulletin 2024/24**

(21) Application number: **22306821.4**

(22) Date of filing: **08.12.2022**

(51) International Patent Classification (IPC):
**H04W 4/06** *(2009.01)* **G08G 1/01** *(2006.01)*
**H04W 4/40** *(2018.01)*

(52) Cooperative Patent Classification (CPC):
**H04W 4/40; G08G 1/0141; H04W 4/06**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Ecole Nationale de l'Aviation Civile 31400 Toulouse Cedex (FR)**

(72) Inventors:
• **DELAHAYE, Daniel**
  **31055 TOULOUSE (FR)**
• **HOANG DINH, Thinh**
  **31055 TOULOUSE (FR)**
• **MARTINEZ, Vincent**
  **31023 TOULOUSE (FR)**

(74) Representative: **Plasseraud IP**
  **66, rue de la Chaussée d'Antin**
  **75440 Paris Cedex 09 (FR)**

(54) **OPTIMIZATION OF MESSAGE GENERATION FREQUENCY AND COMPRESSION**

(57) A transmission method performed by a first equipment for transmitting an information message to at least a second equipment in a traffic environment, the first equipment and the second equipment having access to data related to an initial distribution derived from an initial time-based signal associated to at least the traffic environment,
the transmission method comprising steps of:
obtaining an updated distribution of an updated time-based signal, said updated distribution being related to updated acquisitions of the updated time-based signal collected by the first equipment in the traffic environment,
determining a deviation gap related to a gap between data derived from the initial distribution and data derived from the updated distribution,
if the deviation gap exceeds a predefined deviation threshold, transmitting data related to said deviation gap to the second equipment.

FIG. 6

**Description**

**Field of disclosure**

The present disclosure relates to the field of communications using Vehicle-to-Everything (or V2X) technology and more particularly to methods for mitigating data traffic in V2X channels while ensuring service reliability.

**Background**

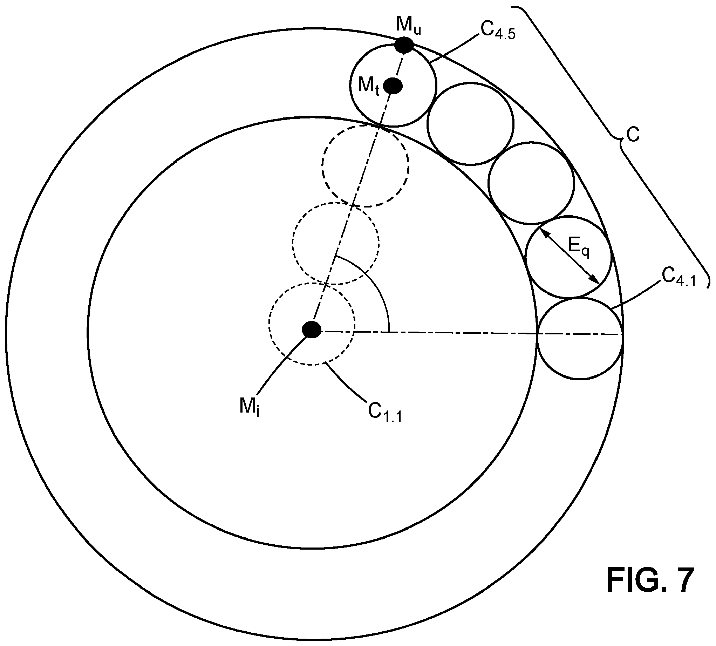

Vehicle-to-Everything (or V2X) communications aim at providing ultra-reliable and low-latency services aiming to notably address road safety, traffic efficiency or energy saving issues. To that end, the traffic environment (such as the road environment) makes use of Intelligent Transport Systems (or ITS) comprising various computer-enabled systems supported by a wireless communication network for providing decision-making assistance to road participants. In the context of ITS, communications may for example occur between vehicles (via vehicle-to-vehicle or V2V communications), between vehicles and infrastructures (via vehicle-to-infrastructure or V2I communications), between vehicles and pedestrians (via vehicle-to-pedestrian or V2P communications) or between vehicles and other devices (via vehicle-to-device or V2D communications). Such communications may rely on instantaneous sharing of traffic data and other information captured by radars and sensors of each V2X-enabled vehicle or road-side units (or RSUs). Such communications may notably rely on access layer technologies such as ITS-G5 or Cellular V2X. Typical ITS networks use the 5.9 GHz ITS band, which consists of several frequency channels. For example, four 10 MHz channels are assigned for the transmission of ITS safety information in Europe. Typical information conveyed via V2X messages may for example include geographical coordinates of the transmitting device (e.g., a vehicle), speed information, headings, type of vehicle information, future and/or past trajectory information. Such information may for example be broadcasted by a vehicle via Cooperative Awareness Messages (or CAM) or Collective Perception Messages (or CPM), according to the European Telecommunications Standards Institute (or ETSI) ITS and ITS-G5 standard technologies, or Basic Safety Messages (or BSM) according to the US SAE standard. Yet, regular V2X transmission of updated information may require an extensive use of V2X data bandwidth, notably in case of high density of vehicles. Transmissions in such context may potentially encounter resource saturation issues such as high Channel Busy Ratios (or CBR), spectrum and resource scarcity. Such resource saturation issue is notably highlighted in the figure 7 of the following paper: *"Road Safety and Road Efficiency Spectrum Needs in the 5.9 GHz for C-ITS and Cooperative Automated Driving"* (CAR 2 CAR Communication Consortium, February 28, 2020), which *"provides evidence that more than 70 MHz of spectrum is needed for the realization* of *road safety applications"* compared to the allocated 40 MHz of spectrum in Europe.

Such resource saturation may notably lead to higher latency and less reliability or range of the V2X application, thereby leading to degraded ITS or V2X quality-of-service.

In order to address such bandwidth saturation issues, existing mitigation methods rely on adjustments of the message transmission policy, for example by adjusting the transmission power, by adjusting the modulation and coding schemes, by adjusting the transmission frequency of messages (also referred to as the transmit rate) and/or by prioritizing transmissions for example. Other methods may consist in compressing the data payload to be transmitted using either line generalization or delta compression approaches.

However, existing methods generally require a compromise on either the age of messages (in other words, messages are buffered and/or delayed until congestion resolution), or inconsistent range due to varying transmit power.

As a consequence, bandwidth saturation and resource scarcity in V2X communications remain issues to be addressed in the context of transport networks serving applications requiring improved latency and reliability.

**Summary of disclosure**

This disclosure addresses such issue and proposes the following solution.

According to a first aspect of the disclosure, it is proposed a transmission method performed by a first equipment for transmitting an information message to at least a second equipment in a traffic environment, the first equipment and the second equipment having access to data derived from an initial distribution of an initial time-based signal associated to at least the traffic environment,
the transmission method comprising steps of:

obtaining an updated distribution of an updated time-based signal, said updated distribution being related to updated acquisitions of the updated time-based signal collected by the first equipment in the traffic environment,

determining a deviation gap related to a gap between the data derived from the initial distribution and data derived from the updated distribution,

if the deviation gap exceeds a predefined deviation threshold, transmitting data related to said deviation gap to the second equipment.

As a consequence, the proposed transmission method advantageously enables a first equipment to provide a second equipment with an information message related to the evolution of a time-based signal within the traffic environment. For example, the information message may enable the first equipment to provide the second equipment with information about the actual (or real) trajectory of a vehicle within the traffic environment, based on updated observations or acquisitions collected by the first equipment. In particular, by both the first equipment and the second equipment having access to the same data related to an initial distribution derived from an initial time-based signal associated to at least the traffic environment, the proposed transmission method guarantees that the knowledge of the second equipment is also known by the first equipment and that the first equipment may be able to determine when such knowledge becomes obsolete and requires updating.

Such transmission method advantageously enables a second equipment to acquire updated knowledge about an updated time-based signal as collected by the first equipment. For example, the first equipment may provide the second equipment with information messages linked to an updated trajectory of the first equipment within the traffic environment in real-time. In particular, the transmission method enables to provide knowledge about movements within the traffic environment to the second equipment, notably when such knowledge cannot be directly sensed or collected by the second equipment. For example, the first equipment may transmit an information message based on updated acquisitions of a signal emitted by a third-party device in the traffic environment, the third-party device being in the sensing range of the first equipment but out of the communication range of the second equipment. The first equipment may thus serve as an intermediary party to relay information about other devices between the second equipment and other devices.

Moreover, the proposed transmission method advantageously enables to reduce the transmission frequency of information messages to the second equipment compared to prior art while maintaining the quality of information bounded to some predefined standard. Indeed, the first equipment uses the communication channel to transmit an information message only when a tolerated deviation error is determined to be exceeded. Thus, the knowledge-update of the second equipment by the first equipment is not systematic: the transmission method proposes to send an information message only when it is determined that a gap between the knowledge of the second equipment about the traffic environment and the actual knowledge resulting from updated acquisitions (or observations) within the traffic environment exceeds a predefined tolerated gap. Thus, the proposed method enables to curb the channel use by reducing the need for frequent retransmission of information of the first equipment.

In addition to reducing the transmission frequency, the proposed transmission method also advantageously enables to reduce the bandwidth use at each transmitted information message, compared to prior art. Indeed, instead of providing the second equipment with exhaustive - and thus, more bandwidth-consuming - information related to the updated time-based signal within the traffic environment, the transmission method proposes to provide the second equipment with data related to the deviation gap. Thus, the proposed transmission method relies on the computational capabilities as well as on the assumed knowledge of the second equipment. In such way, the bandwidth use of each information message is limited to the minimal pieces of information unknown to the second equipment and enabling the latter to update its current knowledge about the traffic environment. The proposed transmission method challenges the zero-knowledge assumption on the receiving side and enables to curb the bandwidth use of information message. For example, instead of transmitting exhaustive parameters to directly deduce an updated time-based signal, the first equipment may provide parameters related to the deviation gap between an initial time-based signal and the updated time-based signal. Based on such deviation gap and on the initial time-based signal known (or assumed) by the second equipment, the second equipment may be able to estimate the updated time-based signal. Thus, the proposed transmission method enables a data compression of the information message compared to existing road broadcasting messages in V2X or ITS for example.

By traffic environment, it may be understood a physical environment where physical traffic occurs between devices (or a plurality of pieces of equipment). Such traffic environment may for example be a road environment where road traffic occurs and involves vehicles, signage infrastructure and/or pedestrians. Such road environment may be a road patch, a district, a city, a highway section for example. Such traffic environment may also refer to an air environment, where air traffic occurs between aircraft. In such a traffic environment, each device has more or less visibility and knowledge about the positioning of other devices - and about the traffic situation overall - within the traffic environment, for example depending on the hardware capabilities of each device and on the position of each device within the traffic environment. In particular, the traffic environment may be understood as a physical environment where wireless communication may occur between devices of such traffic environment.

By first and second equipment, it may be understood devices belonging to the traffic environment. Such pieces of equipment may for example be vehicles. In particular, such first and second equipment may be V2X-enabled equipment, so that the first and the second equipment may wirelessly communicate with each other, using network or sidelink communication for example. Such communication may for example occur via information messages. By an information message, it may be understood a signal transmitted between the first equipment and the second equipment via a communication channel. Such information message may for example be a control signal or a data signal. Such information message may for example occur in the context of Cooperative Awareness Messages (or CAM) or Collective Perception Messages (or CPM), according to the European Telecommunications Standards Institute (or ETSI) ITS and ITS-G5 standard technologies, or Basic Safety Messages (or BSM) according to the US SAE standard.

An initial time-based signal may be understood as a signal corresponding to a time series associated to a movement of a device within the traffic environment. Such initial time-based signal may be obtained based on an estimation or a prediction of an initial distribution by a server distinct from both the first equipment and the second equipment. By the first equipment and the second equipment having access to data derived from such initial distribution, it may be understood that such data related to the initial distribution have been groupcasted or broadcasted to the first equipment and the second equipment. The initial time-based signal may notably be understood as a type-trajectory of a device, that is, a typical pattern taken by a device within the traffic environment. Such initial time-based signal may not result from actual observations or acquisitions of a movement of a device within the traffic environment (that is, the initial time-based signal may not be a real observed trajectory signal) but may result from an estimation. The initial time-based signal may have been estimated before any equipment collects acquisitions of an actual time-based signal within the traffic environment. Thus, the initial time-based signal may be provided to the first equipment and the second equipment even while or even before any of such equipment belongs to the traffic environment.

By an initial time-based signal associated to at least the traffic environment, it may be understood that the initial time-based signal matches a specific traffic environment, so that the initial time-based signal reflects a typical (or theoretical) trajectory of a device (such as a vehicle) within the traffic environment.

By an initial distribution derived from the initial time-based signal, it may be understood a probabilistic representation of the initial time-based signal in a representation domain, reflecting the probability of presence of the device within the traffic environment distributed over time. Such initial distribution may for example be defined as mean and covariance values associated to the initial time-based signal.

By data related to an initial distribution, it may be understood data enabling to deduce (even approximately) the initial distribution. Such data may for example include parameters, a mean, a covariance, an estimate value a representation vector.

By an updated time-based signal, it may be understood a real time-based signal resulting from updated acquisitions or observations of a movement of a device within the traffic environment. For example, the updated acquisitions of an updated time-based signal may correspond to timesteps of a trajectory signal of a device actually observed or collected by the first equipment. Such updated acquisitions of the updated time-based signal may notably occur as the device moves within the traffic environment. The updated time-based signal may thus be understood as the real, actual trajectory signal of a device. Such device may for example be the first equipment itself, or another device within the traffic environment (e.g., another vehicle distinct from the first equipment and the second equipment, a mobile device of a pedestrian). In particular, such device may be understood as the target device whose trajectory signal (or more generally, which time-based signal) is to be known by the second equipment.

By an updated distribution of an updated time-based signal, it may be understood an updated probabilistic representation of the device within the traffic environment in the representation domain. Such updated distribution may notably differ from the initial distribution, as the updated distribution takes updated acquisitions (that is, real observations of the device in the traffic environment) into account. Such updated distribution may notably be obtained based on an estimate - such as a Maximum A Posteriori or MAP estimate - or Minimum Mean Square Estimate (MMSE).

By a deviation gap, it may be understood a gap or a distance between two representations of two time-based signals. In particular, the deviation gap may be understood as a value quantifying a difference between the initial time-based signal and the updated time-based signal. Such deviation gap may for example be expressed as a multivariable vector.

By a predefined deviation threshold, it may be understood a predefined value reflecting a tolerated error in the trajectory associated to a device. An initial time-based signal may be initially associated to the trajectory of the device, for example by predicting the trajectory of the device before the device starts moving within the traffic environment. As the device moves within the traffic environment, updated acquisitions of an updated time-based signal are obtained, such updated time-based forming the actual, real trajectory signal of the device. The predefined deviation threshold then quantifies the tolerated error between such real trajectory and the predicted trajectory of the device. Thus, when the deviation gap exceeds the predefined deviation threshold, it may be understood that the knowledge of the second equipment regarding the trajectory signal of the device is considered obsolete and requires an update.

By transmitting data related to said deviation gap to the second equipment, it may be understood sending data which enables the second equipment to deduce an approximative distance between the initial time-based signal and the actual time-based signal. Such data related to the deviation gap may for example be parameters or coefficients forming such deviation gap, a representation form of such deviation gap, a compressed form of such deviation gap.

According to another aspect of the present disclosure, it is proposed a first equipment configured to transmit an information message to at least a second equipment in a traffic environment according to the proposed transmission method.

According to another aspect of the present disclosure, it is proposed an updating method performed by a second equipment for updating information in a traffic environment based on at least an information message received from a first equipment, the first equipment and the second equipment having access to data derived from an initial distribution of an initial time-based signal associated to the traffic environment,
the updating method comprising steps of:

receiving the information message comprising data related to a deviation gap from the first equipment, said data related to the deviation gap being related to a gap between the data derived from the initial distribution of the initial time-based signal and data derived from an updated distribution, said updated distribution being related to updated acquisitions of an updated time-based signal collected by the first equipment in the traffic environment,

based on the received data related to the deviation gap and at least on the data derived from the initial distribution, determining an inferred distribution associated to the updated time-based signal.

As a consequence, the proposed updating method advantageously enables the second equipment to update the knowledge of the second equipment about the updated time-based signal of a device within the traffic environment, such as the trajectory signal of such device. In particular, the second equipment is able to update such knowledge by correcting its current knowledge using data related to a deviation gap received from the first equipment. The proposed updating method thus enables the second equipment to indirectly track a device within the traffic environment, despite no direct obtention or collection of updated measures or acquisitions related to the updated time-based signal of such device by the second equipment. Indeed, in the context of the proposed updating method, the second user equipment has access to an initial time-based signal associated to the traffic environment. Thus, when receiving an information message from the first equipment, the second equipment is able to determine that its current knowledge of the traffic environment (provided by such initial time-based signal) is obsolete as well to quantify the gap between such current knowledge and the actual time-based signal as observed by the first equipment. Thus, based on such quantified gap and on the initial time-based signal, the second equipment is able to determine an inferred distribution so as to estimate the updated time-based signal, despite not having access to actual acquisitions of such updated time-based signal.

Moreover, since the proposed updating method relies on an initial knowledge of the second equipment (via the initial time-based signal) and on updating such initial knowledge, the proposed updating method advantageously enables the second equipment to rely on an initial prediction and to punctually update such initial prediction only when an information message is received. In particular, as the updated time-based signal occurs within the traffic environment, the updated knowledge of the second equipment as proposed in the updating method will converge to the actual time-based signal within the traffic environment. Thus, the second equipment will require less and less updates via information messages throughout time in order to obtain a satisfying estimate of the updated time-based signal.

By updating information in a traffic environment, it may be understood updating the time-based signal associated to at least one device in the traffic environment. Indeed, the second equipment has knowledge about the trajectory of one or several devices within the traffic environment. Such knowledge may for example result in a tracking performed by the second equipment and/or by receiving information about the trajectory of such devices. Updating information in a traffic environment may thus be understood as updating the knowledge of the second equipment about the trajectory signal associated to a device within the traffic environment.

By determining an inferred distribution associated to the updated time-based signal, it may be understood that the second equipment is able to estimate, through inference, an updated trajectory associated to a device (i.e., the device which movement results in the updated time-based signal). Such updated trajectory is notably inferred based on the content of the information message as received from the first equipment and on the initial time-based signal as known by the second equipment.

According to another aspect of the present disclosure, it is proposed a second equipment configured to update information in a traffic environment based on at least an information message received from a first equipment according to the proposed updating method.

According to another aspect of the present disclosure, it is proposed a broadcasting method performed by a server for broadcasting traffic information to a plurality of equipment about at least a traffic environment, said plurality of equipment comprising at least a first equipment and a second equipment,
the broadcasting method comprising steps of:

collecting a plurality of initial acquisitions of a plurality of time-based signals associated to at least the traffic environment,

based on said plurality of initial acquisitions, determining at least one initial distribution of an initial time-based signal associated to the traffic environment.

broadcasting traffic information to plurality of equipment, said traffic information comprising at least data deriving from the initial time-based signal.

As a consequence, the proposed broadcasting method advantageously enables to provide equipment within the traffic environment with an initial time-based signal associated to such traffic environment. In other words, at least one typical time-based signal within the traffic environment is estimated and provided to the equipment. Thus, the broadcasting method provides each equipment of the traffic environment with a prediction of a typical time pattern (e.g., a trajectory signal) followed by a device within the traffic environment so that each equipment is able to estimate a traffic scenario within the traffic environment.

Moreover, the proposed broadcasting method advantageously enables to provide the first equipment and the second equipment with common traffic information. In other words, the proposed broadcasting method enables a plurality of pieces of equipment within a traffic environment to share a common initial framework or initial knowledge about the traffic environment. Thus, each of the first equipment and the second equipment is able to obtain an initial - and notably identical - knowledge of the traffic environment, before any actual observation or acquisition of the updated time-based signal of a device is collected in the traffic environment. Moreover, based on such broadcasting method, the first equipment is able to determine when the gap between the current knowledge of the second equipment and the actual (or updated) time-based signal exceeds a predefined deviation threshold. In other words, the first equipment is able to detect when the prediction of the initial time-based signal as adopted by the second equipment becomes obsolete, since the first equipment also has access to such prediction.

By a broadcasting method, it may be understood a set of tasks (or steps) performed by a server in order to yield a-priori information required by all devices (e.g., vehicular equipment) in a communication scheme within one or several traffic environments.

By a server, it may be understood a computing entity configured to determine and broadcast traffic information to a plurality of pieces of equipment. In particular, such server may be a distant server distinct from the first equipment and the second equipment.

By a plurality of initial acquisitions of a plurality of time-based signals associated to at least the traffic environment, it may be understood a set of observations of respective time-based signals of a plurality of devices within the traffic environment. Such devices may for example be vehicles, mobile devices of pedestrians. The time-based signals associated to such devices may for example be trajectories taken by such devices, for example as a vehicle moves within the traffic environment or as mobile phone carried by a pedestrian moves as the pedestrian walks within the traffic environment. The plurality of initial acquisitions may thus be collected by the server in the traffic environment for a plurality of devices.

By an initial distribution of an initial time-based signal, it may be understood a predicted or estimated representation of the trajectory of a device within the traffic environment. In particular, such initial distribution of the initial time-based signal does not result from any actual observations and is thus not based on a real observed time-based signal. The initial time-based signal may be estimated as a typical, theoretical time-based signal determined by the server, as a typical trajectory or pattern taken by a typical device within the traffic environment. In the context of the present disclosure, it may be referred to an initial time-based signal. Such initial time-based signal may be equivalently understood in the time domain as the initial distribution (or the initial representation vector, or an initial estimate) in the representation domain.

According to another aspect of the present disclosure, it is proposed a server configured to broadcast traffic information to plurality of equipment about at least a traffic environment according to the broadcasted method as proposed.

According to another aspect of the present disclosure, it is proposed a computer program product comprising program instruction code stored on a computer-readable medium for the execution of any one of:

- the transmission method as proposed,

- the updating method as proposed, and

- the broadcasting method as proposed.

Moreover, the following embodiments may be optionally performed:
In an embodiment of the transmission method, the data related to the initial distribution and the data related to the updated distribution being respectively represented as an initial representation vector and an updated representation vector, and wherein the deviation gap relates to a distance between said initial representation vector and said updated representation vector.

As a consequence, the initial distribution and the updated distribution are processed by the first equipment in a representation domain instead of a time domain.

In an embodiment of the transmission method, the initial representation vector and the updated representation vector are respectively derived from the initial time based-signal and the updated time-based signal using a basis expansion, said basis expansion relying on a function basis with:

$$\hat{x}(k) = \sum_{i=1}^{N} a_i B_i[k] = (a^T B)(k)$$

and

$$\widehat{x^*}(k) = \sum_{i=1}^{N} a_i^* B_i[k] = (a^{*T} B)(k)$$

where:

- $\hat{x}(k)$ is the basis expansion of the initial time-based signal,
- $\widehat{x^*}(k)$ is the basis expansion of the updated time-based signal,
- $a = (a_1, a_2 ..., a_N)^T$ is the initial representation vector,
- $a^* = (a_1^*, a_2^*,... a_N^*)^T$ is the updated representation vector,
- $B = (B_1[k], B_2[k] ..., B_N[k])$ is a vector comprising components of the function basis,
- $k$ is a discrete time variable, and
- $N$ is a representation dimension.

As a consequence, the proposed transmission method advantageously enables a data compression by processing information in the representation domain with a smaller dimension than the time-based signals in the original time domain. For example, a 500-timestep time-based signal may represented using the basis expansion with 5 coefficients, that is, with a representation dimension of 5.

In an embodiment of the transmission method, the representation dimension being strictly inferior to an original dimension of the initial time-based signal and the updated time-based signal, and the basis expansion depends on a preset tolerated approximation error related to a tolerated error of a representation of the time-based signal via the basis expansion, expressed via:

$$\mathbb{E}_{x \sim D}(max_k |x(k) - \hat{x}(k)|) < E_r$$

and

$$\mathbb{E}_{x^* \sim D}(max_k |x^*(k) - \widehat{x^*}(k)|) < E_r$$

where:

- $\mathbb{E}$ is the expected value of the $max_k$ variable,
- $x(k)$ is the initial time-based signal,
- $x^*(k)$ is the updated time-based signal,
- $D$ is a distribution generating at least part of the initial time-based signal and of the updated time-based signal,
- $\hat{x}(k)$ is the basis expansion of the initial time-based signal,
- $x^*(k)$ is the basis expansion of the updated time-based signal,
- $k$ is the discrete time variable, and
- $E_r$ is the preset tolerated approximation error.

As a consequence, the proposed transmission method enables a data compression via dimensionality reduction of the time-based signals, providing that such data compression occurs with a controlled and predictable compression error. In other words, the proposed transmission method advantageously enables to represent the time-based signals with representation values (i.e., representation vectors) providing that the approximation error introduced via such representation is below a predefined tolerated approximation error.

In an embodiment of the transmission method, the obtention of the updated distribution includes at least one step among:

determining a Maximum A-Posteriori - MAP - estimate from the updated distribution, and
determining a Minimum Mean Square Error - MMSE - estimate from the updated distribution,

said MAP estimate and/or MMSE estimate being determined using at least one element among at least:

- a Least Square Estimator,
- a Kalman filter,
- an Unscented Kalman Filter,
- an Extended Kalman Filter,
- a Sequential Importance Sampling - SIS - scheme, and
- a Sequential Importance Resampling - SIR - scheme.

In an embodiment of the transmission method, the deviation gap exceeds the predefined deviation threshold when:

$$\|\delta\|_2 = \sqrt{(a_1 - a_1^*)^2 + (a_2 - a_2^*)^2 + \cdots (a_N - a_N^*)^2} \leq r_{ths}$$

where:

- $\delta$ is the deviation gap,
- $a = (a_1, a_2 ..., a_N)^T$ is the initial representation vector,
- $a^* = (a_1^*, a_2^*,... a_N^*)^T$ is the updated representation vector,
- $r_{ths}$ is a radial threshold,
- $\|.\|_2$ is the Euclidean norm.

As a consequence, the first equipment may be able to detect a deviation gap exceeding the predefined deviation threshold in the representation domain, thus saving computational resources with respect to time-based signal processing. In particular, the first equipment is able to determine that the initial representation vector representing the initial time-based signal is obsolete and that the knowledge of the second equipment based on such initial time-based signal is thus obsolete and requires updating.

In an embodiment of the transmission method, the deviation gap is quantized into a finite number of quantization steps, each quantization step corresponding to a unique codeword.

As a consequence, the proposed transmission method introduces further data compression by quantizing the deviation gap before transmission of the information message to the second equipment. Thus, instead of transmitting vectors coefficients of the deviation gap for example, the first equipment may determine quantization steps (or codewords) corresponding to such deviation gap. The number of symbols required to encode the information message including data related to the deviation gap is indeed reduced when such deviation gap is quantized into codewords.

Moreover, by quantizing the deviation gap, the proposed transmission method advantageously enables to reduce the redundancy of the information provided to the second equipment, while maintaining a tolerable level of error.

In an embodiment of the transmission method, the quantization steps are associated with a predefined diameter parameter corresponding to a preset quantization error tolerance defined by:

$$max_k ||(a^* - a)^T B||_2 \leq E_q$$

where:

- k is the discrete time variable,

- $\| \|_2$ is the Euclidean norm,

- $a^*$ is the updated representation vector,

- $a$ is the initial representation vector,

- $B$ is the function basis vector, and

- $E_q$ is the preset quantization error tolerance.

As a consequence, the proposed transmission method advantageously enables to control the compression error introduced by the quantization of the deviation gap. Indeed, by setting a predefined quantization error tolerance as the diameter parameter of the codewords, the approximation introduced by codewords is guaranteed to generate a predictable and acceptable tolerated error.

In an embodiment of the transmission method, the deviation gap exceeds the predefined deviation threshold when data derived from the initial representation vector and data derived from the updated representation vector belong to distinct codewords.

As a consequence, the proposed transmission method advantageously enables to define the condition for sending the information message to the second equipment based on the quantization steps. The information message is thus not required to be sent by the first equipment as long as the quantization error is not exceeded, that is as long as the deviation gap lies within the same codeword.

In an embodiment of the transmission method, data derived from the initial representation vector is associated to an initial codeword and data derived from the updated representation vector is associated to an updated codeword and the data related to the deviation gap transmitted to the second equipment includes binary digits associated to identifiers of the updated codeword.

As a consequence, the proposed transmission method advantageously enables to provide an information message to the second equipment by further compressing data to be transmitted, so that the bandwidth use is further reduced. Indeed, instead of transmitting the deviation gap, the transmission method proposes to transmit identifiers of the updated codeword, so that the second equipment may, based on such identifiers, obtain an approximation of the deviation gap.

By identifiers of the updated codewords, it may be understood values to identify a codeword. Such values may identify the codeword within spherical coordinates. For example, identifiers may be a pair corresponding to the radial coordinate and the angular coordinate of the codeword within a predefined spherical coordinate system.

In an embodiment of the transmission method, the deviation gap includes a radial spherical coordinate and angular spherical coordinates and the deviation gap is associated with quantized parameters expressed as:

$$r_q = \left\lfloor \frac{r}{E_q} \right\rfloor$$

and:

$$\phi_{i,q} = \left\lfloor \frac{2\pi r_q}{N_c} \times \phi_i \right\rfloor$$

where:

- $r_q$ is a quantized radial parameter of the deviation gap,
- $\phi_{i,q}$ is an $i^{th}$ quantized angular component of the deviation gap,
- $i$ is an index being comprised between 1 and a dimension of the deviation gap minus one,
- $r$ is a radial spherical coordinate of the deviation gap, $r$ being expressed as:

$$r = \|\delta\|_2 = \sqrt{\delta_1{}^2 + \delta_2{}^2 + \cdots \delta_n{}^2}$$

- $\delta_1, \dots \delta_n$ are components of the deviation gap,

- $\phi_i$ is the i<sup>th</sup> angular spherical coordinate of the deviation gap, $\phi_i$ being expressed as:

$$\phi_i = \begin{cases} \arccos\left(\dfrac{\delta_i}{\|\delta\|_2}\right), \delta_i \geq 0, \\ 2\pi - \arccos\left(\dfrac{\delta_i}{\|\delta\|_2}\right), \delta_i < 0 \end{cases}$$

- $N_c$ is the number of codewords $C$ associated with the deviation gap and being expressed as:

$$N_c = \left\lfloor \frac{2\pi r_q}{E_q} \right\rfloor + 1$$

- $E_q$ is a preset quantization error tolerance.

In an embodiment of the transmission method, the initial and updated time-based signals are trajectory signals of a device within the traffic environment and the information message is transmitted in the context of at least one element among:

- Intelligent Transportation System - ITS-G5 - protocol,

- Cellular Vehicle-to-Everything - C-V2X - protocol,

- Collective Perception Messages - CPM-, and

- Common Awareness Messages - CAM -.

In an embodiment of the transmission method, the information message is transmitted via a broadcast.
In an embodiment of the updating method, the updating method further comprises:
receiving a second information message comprising data related to a second deviation gap from the first equipment, said data related to the second deviation gap being related to a second gap between the updated distribution and data derived from a second updated distribution, said second updated distribution being related to second updated acquisitions of the updated time-based signal collected by the first equipment in the traffic environment:
repeating the inference associated to the updated time-based signal by replacing the data related to the initial distribution with data related to the inferred distribution.
As a consequence, the proposed updating method advantageously enables the second equipment to progressively update its information within the traffic environment.
In an embodiment of the broadcasting method, the initial distribution describes an initial representation vector associated to the initial time-based signal, the initial distribution is determined using a basis expansion based on a function basis and the traffic information comprises data deriving from the initial distribution and/or from the initial representation vector.
As a consequence, the proposed broadcasting method advantageously enables to reduce the bandwidth use when transmitting traffic information to equipment using dimensionality reduction via a basis expansion. Thus, by providing traffic information in the representation domain, the broadcasting method advantageously provides the essential information to equipment for obtaining an estimate of the typical trajectory signal associated to a device within the traffic environment.
In an embodiment of the broadcasting method, the initial distribution describing the initial representation vector is determined by at least:
computing an estimate associated to the initial distribution using at least one element among at least:

- a Least Square Estimation, and

- a Kernel Density Estimation.

- a sampling-based scheme.

In an embodiment of the broadcasting method, the function basis may rely on an element among at least:

- a Discrete Fourier Transform - DFT - basis,

- a B-spline function basis,

- a Karhunen-Loeve function basis,

- a Discrete Cosine Transform - DCT - basis,

and the broadcasted traffic information includes data describing such element.

As a consequence, the broadcasting method proposes to provide the first equipment and the second equipment with information so that each equipment may be able to perform the dimensionality reduction on further updated time-based signal. In particular, based on such broadcasted traffic information, the first equipment may be able to determine, based on the updated time-based signal obtained from updated acquisitions, an updated representation vector and/or an updated distribution, having the same sampling rate and the same compression characteristics as the initial representation vector and/or initial distribution.

In an embodiment of the broadcasting method, the plurality of initial acquisitions being collected depending on at least one parameter of acquisition, said parameter of acquisition includes at least one element among at least:

- a predefined traffic scenario in the traffic environment,

- a timestamp,

- a season,

- meteorological conditions,

- a traffic maintenance in the traffic environment,

- an information related to a version of the initial distribution,

and the initial time-based signal is determined depending on said at least one parameter of acquisition.

As a consequence, the initial time-based signal may be predicted in association with one or several parameters. Thus, one or more initial time-based signals may be associated to the traffic environment, the use of an initial time-based signal instead on another depending on the parameters associated to each initial time-based signal.

In an embodiment of the broadcasting method, traffic information is broadcasted to the plurality of equipment via at least one means among at least:

- a software update when the server and the plurality of equipment are connected to a wired or wireless communication network,

- the Intelligent Transportation System - ITS-G5 - protocol, when a communication channel in said ITS-G5 protocol is below a preconfigured first congestion level, and

- the Cellular Vehicle-to-Everything - C-V2X - protocol, when a communication channel in said C-V2X protocol is below a preconfigured second congestion level.

As a consequence, the traffic information is advantageously provided or updated to the equipment without saturating the communication channel or while the equipment are updated, so that the functionalities of the equipment are not affected by such update of traffic information.

**Brief description of drawings**

Other features, details and advantages will be shown in the following detailed description and on the figures, on which:

Fig. 1

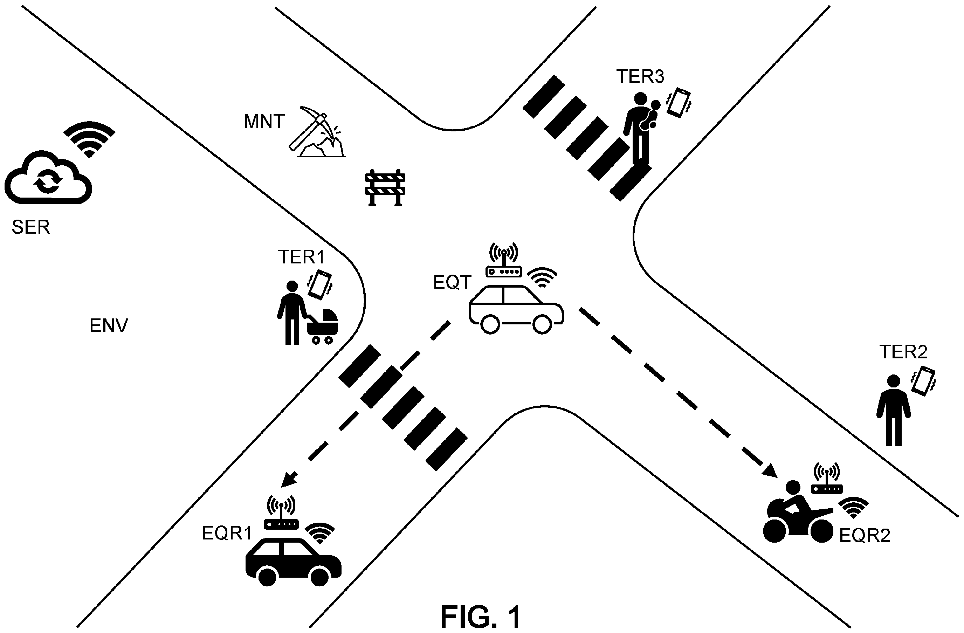

[Fig. 1] shows a traffic environment according to an embodiment of the present disclosure.

**Fig. 2**

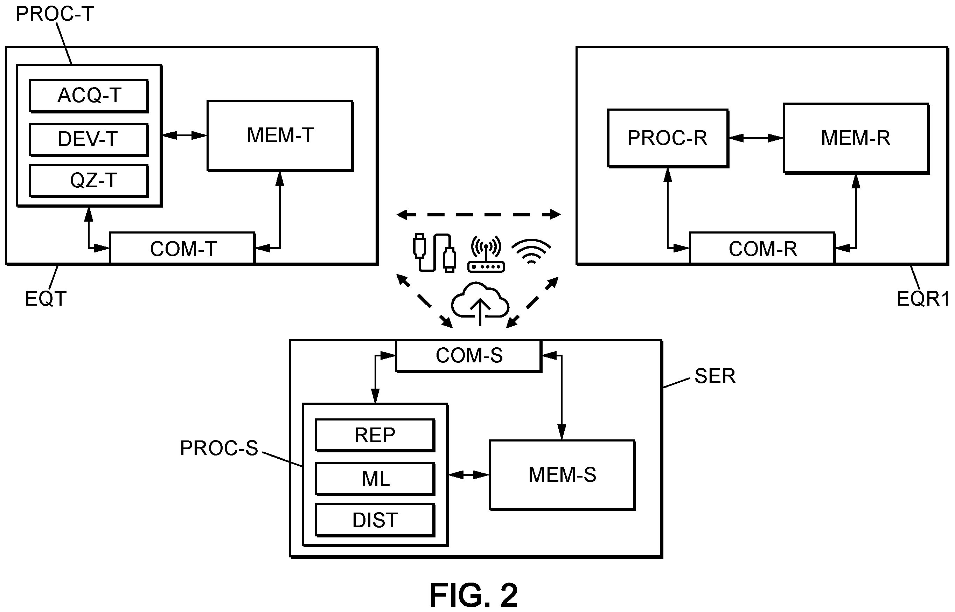

[Fig. 2] shows a schematic architecture of devices according to an embodiment of the present disclosure.

**Fig. 3**

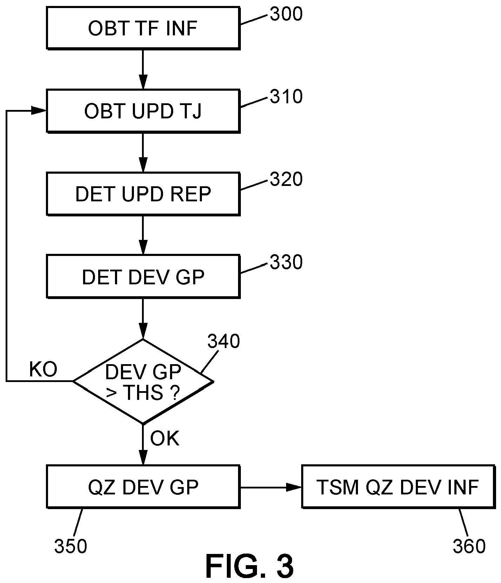

[Fig. 3] is a flowchart showing step of a transmission method according to an embodiment of the present disclosure.

**Fig. 4**

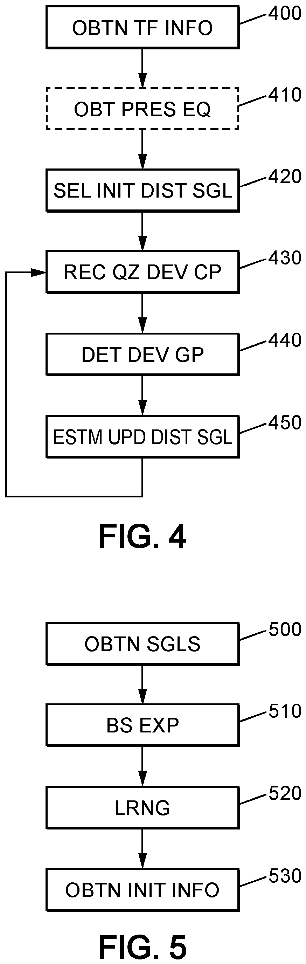

[Fig. 4] is a flowchart showing step of an updating method according to an embodiment of the present disclosure.

**Fig. 5**

[Fig. 5] is a flowchart showing step of a broadcasting method according to an embodiment of the present disclosure.

**Fig. 6**

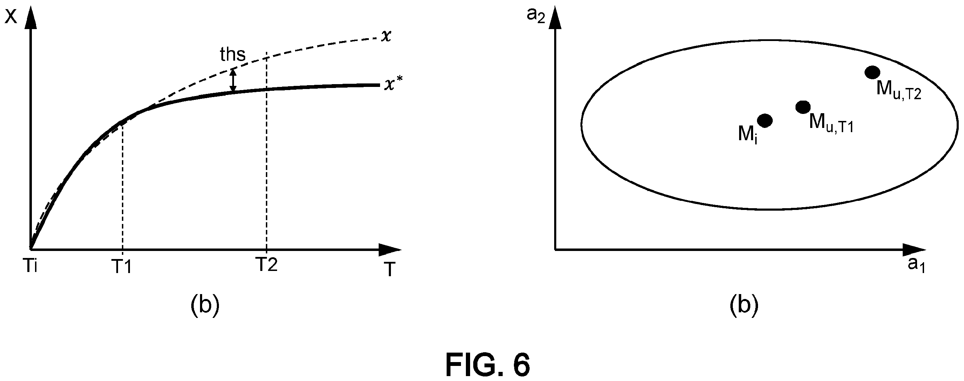

[Fig. 6] shows graphs deriving from a time-based signal according to an embodiment of the present disclosure.

**Fig. 7**

[Fig. 7] shows a quantization of a deviation gap according to an embodiment of the present disclosure.

**Detailed description of embodiments**

It is now referred to figure 1. Figure 1 shows a schematic representation of a traffic environment ENV according to an embodiment of the present disclosure. The traffic environment ENV may refer to an environment in which traffic occurs. Such traffic may for example be road traffic, with traffic involving vehicles and pedestrians for example. Such traffic may also be air traffic, with traffic involving various aircrafts for example. In the context of the present disclosure, the traffic environment ENV may refer to a road environment and include various road elements such as roundabouts, crossroads, one-way roads, two-way roads, pedestrian zones, road maintenance zones MNT, crosswalks, sidewalks, bikeways, bus lanes and/or traffic signs for example. The traffic environment ENV may notably refer to a geographically-delimited environment such as a city, a district, a highway, or any other geographically-delimited area where traffic may occur.

The traffic environment ENV may also include various devices such as vehicular equipment EQR1, EQR2, EQT and terminals TER1, TER2, TER3.

The terminals TER1, TER2, TER3 may for example refer to electronic devices such as mobile devices, laptops, computer devices, connected watches and/or any Internet of Things -or IoT- device. Such terminals TER1, TER2, TER3 may notably be mobile devices of pedestrians for example.

The vehicular equipment EQR1, EQR2, EQT may for example include private vehicles, vans, two-wheeled vehicles, trucks, buses. In particular, the vehicular equipment EQR1, EQR2, EQT may be connected equipment and may be deployed to wirelessly communicate over a communication system. For example, such vehicular equipment EQR1, EQR2, EQT may be V2X-enabled. Thus, vehicular equipment EQR1, EQR2, EQT may communicate with each other via vehicle-to-vehicle -or V2V- communications. Such vehicular equipment EQR1, EQR2, EQT may also communicate with various infrastructures and connected road elements of the traffic environment ENV via vehicle-to-infrastructure -or V2I-communications. Such vehicular equipment EQR1, EQR2, EQT may also communicate with pedestrians and/or other devices such as terminals TER1, TER2, TER3 of the traffic environment ENV via vehicle-to-pedestrian -or V2P- communications and via vehicle-to-device -or V2D- communications. Such communications may rely on instantaneous and/or configured sharing of traffic data and other information captured by radars and sensors of each V2X-enabled vehicular equipment EQR1, EQR2, EQT. For example, a vehicular equipment EQT may share, via V2X messages, geographical coordinates, speed, nature or type, future and/or past trajectory information, headings of a device. Such device may be the vehicular equipment EQT itself or another device such as a terminal TER1, TER2, TER3, tracked by the vehicular equipment EQT for example.

Such V2X communications may notably rely on technologies such as ITS-G5 or Cellular V2X. Typical ITS networks use the 5,9 GHz ITS band, which consists of several bandwidth channels. For example, four 10 MHz channels are assigned for the transmission of ITS safety information in Europe. Such information may for example be transmitted by the vehicular equipment EQR1, EQR2, EQT via Cooperative Awareness Messages (or CAM) or Collective Perception Messages (or CPM), according to the European Telecommunications Standards Institute (or ETSI) ITS and ITS-G5 standard technologies. Such information may also be transmitted via Basic Safety Messages (or BSM) according to the US SAE standard.

In the context of the present disclosure, it is considered a transmitting vehicular equipment EQT, also referred to as transmitting equipment or first equipment, which is configured to transmit at least one information message to at least another vehicular equipment EQR1, also referred to as receiving equipment or second equipment. Such information message may for example be broadcasted, groupcasted or unicasted to the receiving equipment EQR1. Such information message may for example relate to the transmitting equipment EQT itself and/or to another vehicular equipment EQ. Such information message may also relate to a terminal TER1, TER2, TER3. The information message may be transmitted to the receiving equipment EQR1 within the traffic environment ENV. The content as well as the transmission conditions and frequency of such information message by the transmitting equipment EQT will be further detailed in the description.

In particular, in the context of the present disclosure, vehicular equipment EQR1, EQR2, EQT may have access to synchronized traffic information provided by a distant server SER. Such distant server SER may for example be a cloud server managed by a road navigation service software or a road service entity or agency. Such traffic information may be synchronized to a plurality of vehicular equipment EQR1, EQR2, EQT, for example by wired or wireless transmissions of the traffic information to vehicular equipment EQR1, EQR2, EQT. Such traffic information may for example be broadcasted to vehicular equipment EQR1, EQR2, EQT using V2X communications at a periodic frequency or at punctual times, for example depending on the Channel Busy Ratio (or CBR) of such broadcasting channel. Such traffic information may also be transmitted to vehicular equipment EQR1, EQR2, EQT via software updates or when pieces of vehicular equipment EQR1, EQR2, EQT have access to a reliable Internet connection, such reliable Internet connection referring for example to Wi-Fi®, 4G LTE®, 5G NR®..., or a connection to a smartphone (e.g., Bluetooth® or Wi-Fi® tethering). The traffic information may be understood as data related to kinematics associated to traffic within the traffic environment ENV. For example, such traffic information may provide typical trajectories, paths, patterns, directions taken by a vehicle within the traffic environment ENV as well as the typical speed and/or acceleration behavior within the traffic environment ENV. In particular, all vehicular equipment EQR1, EQR2, EQT are provided with the same synchronized traffic information regarding the traffic environment ENV. The traffic information may include data specific to the traffic environment ENV. The detailed content and determination of such traffic information will be further detailed in the description.

It is now referred to Figure 2. Figure 2 shows a schematic architecture of a transmitting equipment EQT, a receiving equipment EQR1 and a distant server SER in the context of the present disclosure.

The transmitting equipment EQT may include a first communication unit COM-T, a first memory unit MEM-T and a first processing unit PROC-T.

The first communication unit COM-T may be configured to collect, receive and/or transmit information. In particular, the first communication unit COM-T may be able to collect perception data derived from the traffic environment ENV including from other devices EQR1, EQR2, TER1, TER2, TER3. Such perception data may relate to a position, a speed, a trajectory signal and/or any time-based (or time-varying) signal related to the transmitting equipment EQT. In such case, the transmitting equipment EQT may for example be enabled with a global navigation satellite system (or GNSS) such as a global positioning system (or GPS). The transmitting equipment EQT may also comprise accelerometers, gyroscopes, an inertial measurement unit (or IMU). The perception data may also relate to a position, a speed, a trajectory signal and/or any time-based (or time-varying) signal related to a device distinct from the transmitting equipment EQT, such as other pieces of vehicular equipment EQR1, EQR2, a terminal TER1, TER2, TER3 or another device within the traffic environment ENV. In particular, such tracked device may be V2X-enabled or not. Such device may for example be a device tracked by the transmitting equipment EQT. To that end, the transmitting equipment EQT may include means for tracking one or several devices. For example, the transmitting equipment EQT may include means for measuring a distance between at least the transmitting equipment EQT and terminal TER3 for example (and thus for estimating a position of the terminal TER3 using trilateration and/or triangulation means for example). The perception data may also relate to the traffic environment ENV such as meteorological information, temperature, pressure, humidity information within the traffic environment ENV. The perception data may also relate to information included in Cooperative Awareness Messages (or CAM) or Collective Perception Messages (or CPM), according to the European Telecommunications Standards Institute (or ETSI) ITS and ITS-G5 standard technologies, or Basic Safety Messages (or BSM) according to the US SAE standard received by the first communication unit COM-T. The first communication unit COM-T may also be able to receive traffic information from the distant server SER. The first communication unit COM-T may thus receive information from devices (e.g., terminals, other vehicular equipment) within the traffic environment ENV, from the distant server SER, and may also sense information within the traffic environment ENV. To that end, the first communication unit COM-T may be linked to or include sensors, radars, antennas and/or any other communication means for collecting, sensing, receiving and/or transmitting information. In an embodiment, the first communication unit COM-T may include several sub-units (not represented on figure 2) : a sub-unit may be configured for wireless communication with other devices and another sub-unit may be a sensor unit configured to sense perception data within the traffic environment ENV for example.

The first memory unit MEM-T may be configured to store information collected, obtained, preconfigured, configured, computed, processed by the transmitting equipment EQT. The first memory unit MEM-T may for example store traffic information provided by the distant server SER. The first memory unit MEM-T may also store content of information messages determined by the transmitting equipment EQ. The first memory unit MEM-T may also store perception data collected by the transmitting equipment EQT. The first memory unit MEM-T may also store sets of acquisitions of time-based signals (e.g., geographical coordinates, speed etc.) related to a device (e.g., the transmitting equipment EQT itself, another vehicular equipment EQR2 or a terminal TER1, TER2, TER3) in the traffic environment ENV. The first memory unit MEM-T may also store preconfigured, preset or predefined thresholds or tolerance values such as a tolerated representation error or a tolerated quantization error. To that end, the first memory unit MEM-T may comprise a volatile memory, such as a random access memory (or RAM), and a non-volatile memory, such as a read-only memory (or ROM).

The first processing unit PROC-T may be configured to process information obtained, received, collected, sensed and/or stored by the transmitting equipment EQT. The first processing unit PROC-T may be configured to process sets of acquisitions obtained within the traffic environment ENV, for example to convert acquisitions of a time-based signal into a representation data, for example an updated representation vector having a representation dimension $n$ smaller than an original dimension $n_o$ of the acquisitions of the time-based signal. To that end, the first processing unit PROC-T may include a first acquisition unit ACQ-T. The first processing unit PROC-T may also be configured to determine a gap, a difference or a distance between initial data associated to an initial time-based signal within the traffic environment ENV and updated data associated to updated time-based signal within such traffic environment ENV. For example, a time-based signal may refer to a trajectory signal of a device. The initial data may refer to an initial trajectory signal estimated or predicted to be followed by the time-based signal (e.g., without fused observations data actually collected about such time-based signal) and updated data may refer to at least part of the actual, real trajectory signal of a time-based signal (e.g., with fused observations data actually collected about such time-based signal). The initial data may for example be obtained based on a prediction or an estimation by the distant server SER and provided to the transmitting equipment EQT as traffic information. The updated data may for example be determined by the transmitting equipment EQ based on perception data collected or obtained within the traffic environment ENV and enabling to confirm or disconfirm the predicted initial trajectory signal. The first processing unit PROC-T may then be configured to determine a deviation gap derived from a potential discrepancy between the predicted trajectory signal and the real trajectory signal. The first processing unit PROC-T may also be able to compare such deviation gap to a predefined deviation threshold. To that end, the first processing unit PROC-T may include a first deviation unit DEV-T. The first processing unit PROC-T may also, based on the result of the first deviation unit DEV-T, for example if the deviation gap exceeds the predefined deviation threshold, process such deviation gap so as to obtain quantized deviation information. The first processing unit PROC-T may notably convert the deviation gap into quantized deviation components to be transmitted to at least a receiving equipment EQR1. To that end, the first processing unit PROC-T may include a first quantization unit QZ-T. Such quantization will be further detailed in the description.

The receiving equipment EQR1 may include a second communication unit COM-R, a second memory unit MEM-R and a second processing unit PROC-R.

The second communication unit COM-R may be configured to receive and collect information. Such information may for example be information messages transmitted, groupcasted or broadcasted by the transmitting equipment EQT or by another device within the traffic environment ENV. Such information may also be traffic information transmitted by the distant server SER. Such information may be received in the context of Cooperative Awareness Messages (or CAM) or Collective Perception Messages (or CPM), according to the European Telecommunications Standards Institute (or ETSI) ITS and ITS-G5 standard technologies, or Basic Safety Messages (or BSM) according to the US SAE standard

The second memory unit MEM-R may be configured to store information collected, received, processed, transmitted by the receiving equipment EQR1. Such stored information may for example be traffic information received from the distant server SER, information messages received from the transmitting equipment EQT and/or preconfigured or preset values or thresholds.

The second processing unit PROC-R may be configured to process information obtained and/or stored by the receiving equipment EQR1. In particular, the second processing unit PROC-R may be configured to update its estimation of a time-based signal associated to a device within the traffic environment ENV. Such time-based signal associated to a device may for example be a trajectory signal of a vehicular equipment (such as the transmitting equipment EQT, another vehicular equipment EQR2). The time-based signal associated to a device may also be a trajectory signal of a mobile terminal TER1, TER2, TER3 belonging to a pedestrian. Thus, the second processing unit PROC-R may be configured to estimate an updated trajectory of a device within the traffic environment ENV. In particular, such estimation by the receiving equipment EQR may rely on information messages transmitted to the receiving equipment EQR1 by the transmitting equipment EQT.

To that end, the second processing unit PROC-R may be configured to receive and obtain content of information messages received by the receiving equipment EQR1 from the transmitting equipment EQT. Such second processing unit PROC-R may notably receive quantized deviation components related to a deviation gap between an initial time-based (or trajectory) signal associated to the device already estimated and/or obtained by the receiving equipment EQR1 and an updated time-based signal obtained and known by the transmitting equipment EQT. The initial time-based signal may be known by the receiving equipment EQR1 based on traffic information received from the remote server SER and/or on previous information messages received from the transmitting equipment EQT.

Based on at least information obtained from the second processing unit PROC-R, the receiving equipment EQR may be configured to determine the deviation gap between the initial time-based (or trajectory) signal of the device already estimated and/or obtained by the receiving equipment EQR1 and the actual (or updated) time-based signal associated to the device.

Based on such deviation gap and on data related to the initial time-based signal, the receiving equipment EQR1 may be configured to estimate an updated time-based signal associated to the device.

In an embodiment, the second processing unit PROC-R and/or the second communication unit COM-R may also be configured to transmit data related to the updated time-based signal to other interfacing modules, such as display units of the second communication unit COM-R and/or of other devices within the traffic environment ENV for example.

The remote server SER may be managed by the information system of a road navigation service or a road management agency. The remote server SER may include a third communication unit COM-S, a third memory unit MEM-S and a third processing unit PROC-S.

The third communication unit COM-S may be configured to collect, obtain, sense input information within the traffic environment ENV. Such input information may for example include initial acquisitions of a plurality of time-based signals - such as a trajectory signals - associated to a plurality of devices - such as a vehicular equipment EQT, EQR1, EQR2 or terminals TER1, TER2, TER3 -. Such acquisitions of time-based signals may for example refer to timestep vectors, which includes, for each signal timestep, several hundreds of parameters (e.g., acceleration, speed, coordinates, orientation, lane position, road curvature, steering wheel angle, etc.) characterizing the movements or the trajectory of devices within the traffic environment ENV. Such input information may also include information related to the traffic environment ENV itself, such as meteorological conditions, seasonal information, time of the day, potential traffic interruption, deviation, obstacles within the road environment ENV, for example due to road maintenance MNT within the traffic environment ENV. The third communication unit COM-S of the remote server SER may also be configured to transmit (for example via broadcast or groupcast) traffic information to devices within the traffic environment ENV, for example to the vehicular equipment EQT, EQR1, EQR2. Such traffic information may be transmitted using a wireless communication network serving the traffic environment ENV. Such traffic information may be transmitted by synchronizing devices via wireless or wired network protocols.

The third memory unit MEM-S may be configured to store information collected, obtained, sensed, processed by the remote server SER. The third memory unit MEM-S may also be configured to store parameters and/or hyperparameters associated to model training algorithms to be computed by the third processing unit PROC-S of the remote server SER. The third memory unit MEM-S may also be configured to store parameters and/or functions associated to a dimensionality reduction process.

The third processing unit PROC-S may be configured to determine traffic information associated with the traffic environment ENV. Such traffic information may notably include at least one initial distribution associated to a time-based signal - such as a trajectory signal - of a device within the traffic environment ENV. Such initial distribution may for example be a typical trajectory pattern associated to the traffic environment ENV and determined by the third processing unit PROC-S. To that end, the third processing unit PROC-S may include a learning unit ML, a representation unit REP and an initial distribution unit DIST.

The learning unit ML may be configured to perform a model training algorithm such as a machine learning algorithm so as to estimate an initial time-based signal associated to the traffic environment ENV. Such initial time-based signal may notably be estimated based on a learning of the plurality of acquisitions of the time-based signals, using for example convolutional neural networks, pattern recognition, clustering and/or random forests models. In particular, the machine learning algorithm may also take other input information into account, such as the information related to the traffic environment ENV itself as aforementioned.

The representation unit REP may be configured to convert or transform the initial time-based signal (that is, in a time domain) within the traffic environment ENV into an initial representation vector (that is, in a representation domain) and/or into an initial distribution describing such initial representation vector. Such representation unit REP may notably include a dimensionality reduction process. The representation unit REP may for example be configured to perform a principal component analysis (or PCA) or more generally a basis expansion using basis functions on the initial time-based signal.

The initial distribution unit DIST may be configured to transmit, via a broadcast or a groupcast for example, traffic information to a plurality of vehicular equipment within the traffic environment ENV. In particular, such traffic information may include the initial representation vector and or data enabling to derive such initial representation, for example a covariance matrix and a mean vector associated to such initial representation vector. The traffic information may also include data related to the initial distribution associated to the traffic environment ENV, for example a mean and a covariance of such initial distribution, as well as data related to the basis expansion, such as the basis functions for example. In particular, the initial distribution unit DIST may transmit the traffic information in association with the traffic environment ENV. In other words, the initial distribution and the initial representation vector are associated to the traffic environment ENV. Another section of traffic (e.g., another district, another highway...) may be associated to a distinct initial representation vector and a distinct initial distribution, determined based a plurality of acquisitions of time-based signals retrieved in such section of traffic. The initial distribution unit DIST may also transmit several initial representation vectors and/or several initial distributions associated to the traffic environment ENV, each initial representation vector and/or each initial distribution being associated with specific times in day, in a year and/or specific meteorological conditions for example.

It is now referred to figure 3. Figure 3 is a flowchart showing steps of a transmission method performed by a transmitting vehicular equipment EQT. Such transmission method may notably be performed in the context of figure 1: a transmitting equipment EQT may provide information messages to another vehicular equipment referred to as the receiving equipment EQR1. Such information message may for example relate to a trajectory within the traffic environment of the transmitting equipment EQT itself but may also relate to a trajectory of another device, such as a vehicular equipment EQR2 or a terminal TER3. Such transmission method thus enables a receiving equipment EQR1 to indirectly track a device and have knowledge of the trajectory of such device within the traffic environment ENV via information messages received from the transmitting equipment EQT. For the sake of simplicity of the disclosure, it may be considered that the transmission method is performed by the transmitting equipment EQT for transmitting information messages related to a trajectory of the transmitting equipment EQT itself. However, a similar transmission method may be performed by the transmitting equipment EQT for transmitting information messages related to a trajectory of another device of the traffic environment ENV.

At a step 300, the transmitting equipment EQT may obtain traffic information related to at least the traffic environment ENV. Such traffic information may notably be obtained from a distant server SER broadcasting traffic information to a plurality of equipment, such traffic information being in association with specific geographical environments including the traffic environment ENV. The obtention of traffic information may be part of an initial enrolment process or a synchronization process between the transmitting equipment EQT and the distant server SER, for example in the context of an enrolment to a road navigation assistance service or to a traffic information system provided by a traffic agency. Such traffic information may notably be obtained by the transmitting equipment EQT as the transmitting equipment EQT enters the traffic environment ENV, or beforehand.

Such traffic information may notably include data deriving from an initial representation vector and/or from an initial distribution representing an initial time-based signal (e.g., an initial trajectory signal) estimated by the distant server SER. Such initial representation vector and/or initial distribution may for example be estimated by the distant server SER as a typical representation of a trajectory taken by a device in the traffic environment ENV. The estimation of such initial distribution and/or initial representation vector will be further described. Such initial representation vector and/or such initial distribution may for example refer to components or parameters for estimating the initial trajectory. In particular, such traffic information may provide the transmitting equipment EQT with information for determining a typical trajectory taken by a device within the traffic environment ENV. For example, such data deriving from the initial representation vector and/or the initial distribution contained in the traffic information may include at least one element among:

- mean and covariance values associated to the initial distribution representing the initial trajectory;

- a mean function associated to the initial distribution representing the initial trajectory;

- basis functions for obtaining the initial representation vector based on a basis expansion, such basis functions being for example derived from a Discrete Fourier Transform - DFT - basis, a B-spline function basis, a Karhunen-Loeve Transform - KLT - basis, and/or a Discrete Cosine Transform - DCT - basis;

- a covariance matrix associated to the initial representation vector.

Such data deriving to the initial representation vector and/or to the initial distribution associated to the initial trajectory signal may notably be determined beforehand by the distant server SER based on an initial set of acquisitions of trajectory signals within the traffic environment ENV, based on which the initial trajectory signal may be determined and represented as the initial representation vector and/or the initial distribution. The initial distribution, the initial representation vector and the initial time-based signal may be equivalently understood, as the crossing between representation domain and time domain may be performed. Preferably, the transmitting equipment EQT may receive traffic information in the representation domain. Such determination of the initial representation vector and/or the initial distribution will be further described in figure 5.

Thus, the transmitting equipment EQT may be able to obtain, at step 300, an initial distribution and/or an initial representation vector associated to an estimated or predicted trajectory (also referred to as the initial trajectory or initial time-based signal) of a device within the traffic environment ENV. Such initial distribution and/or initial representation vector may notably be derived by the transmitting equipment EQT from the content of the traffic information as broadcasted by the distant server SER.

The traffic information may also include other information such as a measurement precision of the data deriving to the initial representation vector and/or to the initial distribution contained in the traffic information. The traffic information may also include preconfigured or preset parameters for selecting the initial distribution and/or the initial representation vector to be considered for obtaining the initial trajectory, notably when the traffic information includes data deriving to several initial representation vectors and/or initial distributions. Indeed, in an embodiment of the present disclosure, the traffic information may include data deriving to several initial representation vectors. Several representation vectors may for example be associated to the same traffic environment ENV and may relate to distinct meteorological conditions or distinct time periods or seasons in a day, a month or a year for example. Thus, different initial representation vectors and/or different initial distributions may be considered by the transmitting equipment EQT for determining the initial trajectory to be considered depending on a humidity rate, a luminosity rate and/or a timestamp at the time when such initial trajectory is to be considered. Different initial representation vectors and/or different initial distributions may also be considered via the traffic information depending on the considered environment section. For example, a typical trajectory of a vehicle may differ between the traffic environment ENV and another environment, for example due to distinct traffic scenarios and/or distinct road maps for example.

In the context of the present disclosure, based on the obtained traffic information, the transmitting equipment - and more generally, any equipment obtaining such traffic information - may deduce a unique initial representation vector and/or initial distribution associated to the traffic environment ENV.

At a step 310, the transmitting equipment EQT may obtain an updated set of acquisitions (also referred to as a second set of acquisitions) of its trajectory signal within the traffic environment ENV. The transmitting equipment EQT may notably obtain such updated set of acquisitions after estimating the initial trajectory at step 300. For example, such updated set of acquisitions may be obtained by the transmitting equipment EQT by capturing, in real time, coordinates related to a position, a speed and/or an acceleration of the transmitting equipment EQT within the traffic environment ENV, for example by using GNSS and/or other sensors. In another embodiment, as aforementioned, the tracked device may be another device distinct from the transmitting equipment EQT itself. In such case, the updated set of acquisitions obtained at step 310 may refer to an updated trajectory signal as tracked by the transmitting equipment EQT, for example via tracking information (e.g., position, speed, acceleration) of the device sensed by the transmitting equipment EQT via sensors, radars and/or predicted by the transmitting equipment EQT, for example using a Kalman filter. Such updated set of acquisitions may notably refer to a plurality of timestep vectors of a time series $x^*(t)$ (where $t$ is a continuous time variable) - or similarly $x^*(k)$ (where $k$ is a discrete time variable) - corresponding to the actual trajectory signal (or at part of it) when such updated set of acquisitions is obtained. Thus, at step 310, the transmitting equipment EQT obtains updated acquisitions of the tracked trajectory signal within the traffic environment ENV. In other words, the transmitting equipment EQT has knowledge, at step 310, of the actual trajectory (or at least, part of it) taken by the tracked device (considered to be the transmitting equipment EQT itself here).

At a step 320, the transmitting equipment EQT may determine, based on the updated set of acquisitions obtained at step 310, an updated representation vector $a^*$ associated to the actual trajectory signal as obtained by the transmitting equipment EQT at step 310. In particular, such updated representation vector $a^*$ may be determined so as to be comparable to the initial representation vector $a$. To that end, the transmitting equipment EQT may use traffic information, for example data deriving to a function basis $B = (B_1, B_2 ..., B_N)$ included in the traffic information, so as to perform a basis expansion of the actual trajectory signal $x^*(k)$. Such function basis may for example have a finite expansion dimension $N$. Such function basis $B$ may notably refer to one element among at least:

- a Discrete Fourier Transform - DFT - basis,
- a B-spline function basis,
- a Karhunen-Loeve function basis, and
- a Discrete Cosine Transform - DCT - basis.

The basis expansion may then be expressed as:

$$\widehat{x^*}(k) = \sum_{i=1}^{N} a_i^* B_i[k] = (a^T B)(k)$$

where:

- $\widehat{x^*}(k)$ is the basis expansion of the actual trajectory signal $x^*(k)$,
- $a^* = (a_1^*, a_2^*, ... a_n^*)^T$ is the updated representation vector,

- $B = (B_1[k], B_2[k] ..., B_n[k])$ is a vector comprising components of the function basis,
- $k$ is a discrete time variable, and
- $N$ is an expansion dimension.

In an embodiment, such basis expansion of the actual trajectory signal $x*(k)$ may relate to a functional principal components analysis (or FPCA), wherein the components of the basis expansion (that is, the components of the matrix $a^T B$) are the principal components describing the variation of the actual trajectory signal $x*(k)$ . The basis functions $B = (B_1[k], B_2[k] ..., B_N[k])$ may thus be understood as the eigenbasis comprising eigenfunctions. In particular, the basis expansion of the actual trajectory signal $x*(k)$ may be expressed by $n$ first principal components, with $n$ being inferior to the expansion dimension $N$, such $n$ first principal components (or eigenfunctions) being considered to represent the dominant variation of the actual trajectory signal $x*(k)$. In other words, the basis expansion of the actual trajectory signal $x*(k)$ considered in the context of the present disclosure may be simplified as:

$$\widehat{x^*}(k) \approx \sum_{i=1}^{n} a_i{}^* B_i[k] = (a^T B)(k)$$

where $n$ is a representation dimension, inferior to the expansion dimension N. In other words, the representation dimension $n$ may be understood as the number o truncated components to be considered for performing the basis expansion of the actual trajectory signal $x*(k)$. In the context of the present disclosure, the basis expansion of a trajectory signal will refer to an expansion into $n$ principal components.

Such representation dimension $n$ is notably inferior to the original dimension $n_o$ of the actual trajectory signal $x*(k)$. For example, the actual trajectory signal $x*(k)$ may have an original dimension $n_o$ of size of 500 and comprise a 500 timestep vector while a representation dimension $n$ may have a size of 5, for example with an updated representation vector $a*$ having 5 components. More particularly, the representation dimension $n$ may depend on a preset tolerated approximation error ($E_r$). Such preset tolerated approximation error ($E_r$) may be understood as a tolerated error of representation of a time-based trajectory signal via the basis expansion. In other words, the preset tolerated approximation error ($E_r$) may reflect a maximum tolerated compromise between the compression of the actual trajectory signal $x*$, for less resource and computational occupancy, and the representation accuracy of such basis expansion $\widehat{x^*}$ . In other words, the basis expansion of the actual trajectory signal $x*$ is performed at step 320 providing that the following expression is satisfied:

$$\mathbb{E}_{x \sim D}(max_k |x^*(k) - \widehat{x^*}(k)|) < E_r$$

where:

- $\mathbb{E}$ is the expected value of the $max_k$ variable,

- $x*$ is the actual trajectory signal,

- $D$ is a distribution generating at least part of the actual trajectory signal,

- $\widehat{x^*}$ is the basis expansion of the actual trajectory signal,

- k is the discrete time variable, and

- $E_r$ is the preset tolerated approximation error.

At such step 320, the transmitting equipment EQT may thus determine an updated representation vector $a*$ being described by an updated distribution. Such step 320 may notably include determining an estimate of such updated distribution to describe such updated representation vector $a*$. Such estimate may for example refer to an element among at least a Maximum A-Posteriori - MAP - estimate and a Minimum Mean Square Error (MMSE) estimate. The MAP and/or the MMSE estimate may then be determined at step 320 using means among at least:

- a Least Square Estimator,

- a Kalman filter,

- an Unscented Kalman Filter,

- an Extended Kalman Filter,

- a Sequential Importance Sampling (SIS) scheme, and

- a Sequential Importance Resampling (SIR) scheme.

Thus, the updated distribution determined based on the actual trajectory signal x* as observed by the transmitting equipment EQT at step 310 may be represented as an estimate. Examples of such estimates $M_{u,T1}$, $M_{u,T2}$ representing an actual trajectory signal x* observed at different times T1, T2 are for example represented on the right-part of figure 6.

Thus, at the end of step 320, the transmitting equipment EQT may obtain an updated representation vector a* comparable to the initial representation vector a obtained via the traffic information at step 300. In particular, the initial representation vector a and the updated representation vector a* have a same dimension corresponding to the representation dimension n and respectively reflect a typical trajectory and an actual trajectory signal of the transmitting equipment EQT within the traffic environment ENV.

At a step 330, the transmitting equipment EQT may determine a deviation gap $\delta$ between representations of the initial trajectory signal x and the actual trajectory signal x*. Such deviation gap $\delta$ may thus be determined by the transmitting at step 330 as:

$$\delta = a^* - a = (\delta_1, \delta_2, ..., \delta_n)^T$$

Thus, the deviation gap $\delta$ may be understood as a difference between the initial representation vector a and the updated representation vector a*, such deviation gap $\delta$ having the same size as both representation vectors a, a* corresponding to the representation dimension n. The deviation gap $\delta$ may reflect, in the representation domain of the trajectory signal of the transmitting equipment EQT, a gap, a distance and/or a distance between the typical trajectory x estimated and/or predicted by the transmitting equipment EQT - and potentially by all other equipment having received the traffic information - based on the traffic information, and the real trajectory x* observed, sensed by the transmitting equipment EQT, based on the updated set of acquisitions of the trajectory signal.

At a step 340, the transmitting equipment EQT may compare the deviation gap $\delta$ determined at step 330 with a predefined, preconfigured or preset deviation threshold THS:

$$\|\delta\| = \sqrt{(a_1 - a_1^*)^2 + (a_2 - a_2^*)^2 + \cdots + (a_N - a_N^*)^2} \leq THS$$

Such deviation threshold THS may for example be expressed in meters and be set at 1 meter or 4 meters for example.

If, at step 340, the deviation gap $\delta$ is below the deviation threshold THS, it may be considered that the difference between the initial representation vector a and the updated representation vector a* is not significant enough to send an information message to the receiving equipment EQR1. In other words, it may be considered that, considering the updated set of acquisitions of the time-based signal x*, the initial representation vector a still, approximately, matches the actual trajectory x*, of the transmitting equipment EQT (in other words, the initial trajectory signal x as initially predicted by the distant server SER remains approximately true). In such case, no information message is sent by the transmitting equipment EQT, and the steps 310 to 340 may be repeated when further sets of acquisitions of the time-based signal are acquired by the transmitting equipment EQT.

However, if, at step 340, the deviation gap $\delta$ exceeds the deviation threshold THS, it may be considered that the difference between the initial representation vector a and the updated representation vector a* is significant to the extent that sending an information message to the receiving equipment EQR1 is required. In other words, it may be considered that, considering the updated set of acquisitions of the time-based signal x*, the initial representation vector a does not reflect the actual trajectory x*, of the transmitting equipment EQT anymore (in other words, the initial trajectory signal x as initially predicted by the distant server SER is not true anymore). In such case, at a step 350, the transmitting equipment EQT may proceed to determine compressed data for transmitting the deviation gap $\delta$ to the receiving equip-

ment EQR1.

At step 350, the process may include a quantization of the deviation gap $\delta$. To that end, the deviation gap $\delta$ may first be converted into spherical coordinates ($r$, $\phi_{i,i \in [\![1:n]\!]}$):

$$r = \|\delta\|_2 = \sqrt{\delta_1^2 + \delta_2^2 + \cdots \delta_n^2}$$

$$\phi_i = \begin{cases} \arccos\left(\dfrac{\delta_i}{\|\delta\|_2}\right), \delta_i \geq 0, \\ 2\pi - \arccos\left(\dfrac{\delta_i}{\|\delta\|_2}\right), \delta_i < 0 \end{cases}$$

where:

- $r$ is a radial spherical coordinate of the deviation gap $\delta$,
- $\delta_1, \dots \delta_n$ are the components of the deviation gap $\delta$, and
- $\phi_i$ is the ith angular spherical coordinate of the deviation gap $\delta$.

Afterwards, at such step 350, such spherical coordinates are quantized into codewords *C,* also referred to as quantization steps. Such codewords *C* may notably be defined as data groups represented by a centroid point in the representation domain and a diameter parameter. In the context of the present disclosure, at step 350, the quantization process of the deviation gap $\delta$ may satisfy a preset quantization error tolerance $E_q$, so that the compression of the deviation gap $\delta$ into quantized information respects a preconfigured (and thus controllable) error $E_q$. In other words, codewords *C* may be defined at step 350 based on spherical coordinates of the deviation gap $\delta$ providing that the following constraint is respected:

$$max_k||\delta^T B||_2 \leq E_q$$

where:

- k is the discrete time variable,
- $\| \|_2$ is the Euclidean norm,
- $\delta$ is the deviation gap,
- *B* is the function basis vector used for the basis extension, and
- $E_q$ is the preset quantization error tolerance.

In the context of the present disclosure, the diameter parameter of the codewords *C* may correspond to the quantization error tolerance $E_q$. An initial codeword $C_{1.1}$ related to the initial representation vector *a* may thus be defined by:

- a centroid point corresponding to the initial estimate $M_i$ associated to the initial representation vector *a*, and
- a diameter parameter corresponding to the quantization error tolerance $E_q$.

Based on such initial codeword $C_{1.1}$, the deviation gap $\delta$ may be represented in the representation domain via a plurality of codewords *C* having the same diameter parameter. Such codewords *C* are for example illustrated on figure 7 and will be further described in the present disclosure.

The deviation gap $\delta$ may also be associated with quantized parameters expressed as:

$$r_q = \left\lfloor \frac{r}{E_q} \right\rfloor$$

and:

$$\phi_{i,q} = \left\lfloor \frac{2\pi r_q}{N_c} \times \phi_i \right\rceil$$

where:

- $r_q$ is a quantized radial parameter of the deviation gap $\delta$,
- $\phi_{i,q}$ an $i^{th}$ quantized angular component of the deviation gap $\delta$,
- $N_c$ is the number of codewords associated with the deviation gap $\delta$ and being expressed as:

$$N_c = \left\lfloor \frac{2\pi r_q}{E_q} \right\rceil + 1$$

At such step 350, the transmitting equipment EQT may thus determine data (that is, codewords $C$) derived from the deviation gap $\delta$. In particular, at such step 350, the transmitting equipment EQT may determine, based on the deviation gap $\delta$, the codeword associated to the updated representation vector $a^*$. In particular, the deviation gap $\delta$ exceeding the deviation threshold THS at step 340 is equivalent to the initial estimate $M_i$ associated to the initial representation vector $a$ and the updated estimate $M_u$ associated to the updated representation vector $a^*$ belonging to distinct codewords $C_{1.1}$, $C_{4.5}$.

At a step 360, the transmitting equipment EQT may transmit an information message to at least the receiving equipment EQT. Such information message may notably include data related to the quantized information derived from the deviation gap $\delta$ and determined at step 350. In an embodiment, such data related to the quantized information may include identifiers of the updated codeword $C_{4.5}$ to which the updated estimate $M_u$ associated to the updated representation vector $a^*$ belongs. Such updated codeword $C_{4.5}$ notably reflects the deviation gap $\delta$ separating the updated representation vector $a^*$ from the initial representation vector $a$. For example, if the codeword $C_{4.5}$ is to be transmitted at step 360, the corresponding identifiers (4;5) or in binary digits (0100;0101) will be transmitted in the information message. Based on such information message as well as on a knowledge of the initial representation vector $a$ and/or on the initial distribution of such initial representation vector $a$ from which the initial estimate $M_i$ may be derived, any receiving unit - such as the receiving equipment EQR1, may be able, to determine an approximative value of the updated estimate $M_u$ associated to the updated distribution and/or to the updated representation vector $a^*$.

The information message may for example be broadcasted or groupcasted at step 360 to all vehicular equipment - including the receiving equipment EQR1 - within the traffic environment ENV via V2X communication, so that all receiving vehicular equipment EQR1, EQR2 may be able to update their knowledge of the trajectory of the transmitting equipment EQT. Such update performed by recipients of the information message as aforementioned will be further described in the following figure 4.

In an embodiment of the present disclosure, the transmission method may be repeated, for example when the transmitting equipment EQT acquires a new set of acquisitions of the time-based signal (or the trajectory signal) at 310. In such case, steps 320 to 360 are repeated by replacing the initial representation vector $a$ with the updated representation vector $a^*$ as determined by the transmitting equipment EQT at step 320 of the immediately preceding iteration. Thus, the proposed disclosure enables a transmitting equipment EQT to punctually broadcast or groupcast corrections of the knowledge of other receiving equipment EQR1 regarding the trajectory signal of a device within the traffic environment ENV by transmitting punctual information messages when corrections of such knowledge is determined to be substantially required (according to step 340).

It is now referred to figure 4. Figure 4 is a flowchart showing steps of an updating method performed by a receiving vehicular equipment EQR1. Such updating method may be performed by a receiving equipment EQR1 for updating its knowledge of a time-based signal such as a trajectory signal associated to a device in a traffic environment ENV. In particular, such device may not be directly tracked by the receiving equipment EQR1. For example, in the context of the traffic environment ENV as illustrated on figure 1, the receiving equipment EQR1 may perform the updating method to update its knowledge about the trajectory of another receiving equipment EQR2 or about a mobile terminal TER3 belonging to a pedestrian. For the sake of simplicity, it will be considered that the receiving equipment EQR1 performs the updating method for estimating an updated trajectory of the transmitting equipment EQT itself.

At a step 400, the receiving equipment EQR1 may obtain traffic information related to at least the traffic environment ENV, for example via a broadcast or groupcast performed by the distant server SER. Such step 400 is notably identical to step 300 of figure 3 for the transmitting equipment EQT. In particular, the traffic information obtained by the receiving equipment EQR concerning the traffic environment ENV is similar to the traffic information obtained by the transmitting equipment EQT. Thus, based on at least the traffic information obtained at such step 400, the receiving equipment EQR1 may be able to obtain, for a device within the traffic environment ENV, an initial representation vector *a* and/or an initial distribution reflecting a typical trajectory predicted and/or estimated to be followed by such device within the traffic environment ENV. The receiving equipment EQR1 may also obtain an estimate - such as a MAP or a MMSE estimate - associated to the initial representation vector *a*.

At a step 410, the receiving equipment EQR1 may be in the traffic environment ENV. At step 410, the receiving equipment EQR1 may detect a presence of a device - such as, the transmitting equipment EQT - within the traffic environment ENV. The detection of the presence of the transmitting equipment EQT may for example include receiving a signal from the transmitting equipment EQT when such transmitting equipment EQT enters the traffic environment ENV for example. Such detection may also include broadcasting ping signals by the receiving equipment EQR1 within the traffic environment ENV for detecting the presence of a device newly entering the traffic environment ENV.

At a step 420, the receiving equipment EQR1 may associate an estimated and/or predicted typical trajectory signal *x* to the transmitting equipment EQT detected at step 410. In other words, the receiving equipment EQR1 may speculate that the initial trajectory signal x as obtained via the traffic information is the real trajectory signal of the transmitting equipment EQT. In particular, the receiving equipment EQR1 may adopt the prediction or the assumption that the trajectory to be expected from the transmitting equipment EQT within the traffic environment ENV matches the initial trajectory signal, and thus matches a representation via the initial representation vector *a* and/or the initial distribution. In an embodiment, the receiving equipment EQR1 may select an initial representation vector *a* and/or an initial distribution among several initial representation vectors and/or initial distributions provided by the traffic information. Such selection may for example depend on the traffic scenario within the traffic environment ENV, the meteorological conditions and/or the time at which the transmitting equipment EQT is detected by the receiving equipment EQR1. Thus, at step 420, the receiving equipment EQR1 may be able to estimate an initial trajectory signal *x* associated to the transmitting equipment EQT.

At a step 430, the receiving equipment EQR1 may receive an information message from the transmitting equipment EQT. Such information message may for example be received via V2X communication, in the context of Cooperative Awareness Messages (or CAM) or Collective Perception Messages (or CPM), according to the European Telecommunications Standards Institute (or ETSI) ITS and ITS-G5 standard technologies, or Basic Safety Messages (or BSM) according to the US SAE standard. Such information message received at step 430 may notably comprise quantized information related to a gap between the initial representation vector *a* and the actual representation vector $a^*$ associated to the trajectory signal of the transmitting equipment EQT. The detailed content of such quantized information is notably described at step 350 of figure 3. As explained in the description above (with reference to step 340 of figure 3), the reception of the information message at step 430 conveys to the receiving equipment EQR1:

- that the initial representation vector *a* and/or the initial distribution as adopted by the receiving equipment EQR1 at step 420 is not representing the actual trajectory signal of the transmitting equipment EQT,

- quantized information in order to infer an estimated value of the updated representation vector $a^*$ associated to an updated signal of the transmitting equipment EQT, based on such quantized information as well as on the initial representation vector *a* and/or the initial distribution.

Thus, at a step 440, the receiving equipment EQR1 may, based on the initial representation vector *a* and/or the initial distribution as well as on the quantized information, determine an estimation of the deviation gap $\delta$ between the initial representation vector *a* as known by the receiving equipment EQR1 and the updated representation vector $a^*$, which is unknown by the receiving equipment EQR1 at this stage. In particular, such estimated value of the deviation gap $\delta$ may differ from the exact value of the deviation gap $\delta = a^* - a$, since the codewords *C* defining the quantized information received by the receiving equipment EQR1 satisfies a quantization error tolerance $E_q$. Thus, the estimated value of the deviation gap $\delta$ as determined by the receiving equipment EQR1 at step 440 may differ from the exact value of the deviation gap $\delta$.

At a step 450, the receiving equipment EQR1 may, based on the estimated value of the deviation gap $\delta$ as determined at step 440 and on the initial representation vector *a* and/or on the initial distribution describing such initial representation vector *a*, determine an estimated value of the updated representation vector $a^*$, to estimate an updated trajectory signal of the transmitting equipment EQT within the traffic environment. In particular, such updated trajectory signal as estimated by the receiving equipment EQR1 may differ from the actual trajectory signal $x^*$ as determined by the transmitting equipment EQT itself (step 310 of figure 3), since the estimated values determined by the receiving equipment EQR1 are computed using quantized information according to a quantization error tolerance $E_q$. Yet, the error of such approximation performed by the receiving equipment EQR1 is controlled, since such quantization error tolerance $E_q$ may be chosen, preconfigured and/or preset.

Thus, based on the information message received by the receiving equipment EQR1 from the transmitting equipment EQT, the receiving equipment EQR1 may be able to correct and/or update its initial prediction of the trajectory signal *x* associated to a device - such as the transmitting equipment EQT - within the traffic environment ENV.

In an embodiment of the present disclosure, the updating method may be repeated, for example when the receiving equipment EQR1 receives another information message from the transmitting equipment EQT at step 430. In such case, steps 440 and 450 are repeated by replacing the initial representation vector *a* with the estimated value of the updated representation vector *a\** as determined by the receiving equipment EQR1 at step 450 of the immediately preceding iteration. Thus, the proposed disclosure enables a receiving equipment EQR1 to punctually correct its most-updated knowledge about the trajectory of a device within the traffic environment ENV based on the reception of punctual information messages.

It is now referred to figure 5. Figure 5 is a flowchart showing steps of a broadcasting method performed by a distant server SER. The broadcasting method may enable a distant server SER, for example in the context of a road navigation assistance service, to broadcast traffic information to a plurality of vehicular equipment EQR1, EQR2, EQT regarding at least a traffic environment ENV.

At a step 500, the distant server SER may collect, obtain, sense input information within the traffic environment ENV. Such input information may for example include initial acquisitions of a plurality of time-based signals - such as a trajectory signals - associated to a plurality of devices - such as a vehicular equipment or terminals -. Such acquisitions of time-based signals may for example refer to timestep vectors, which includes, for each signal timestep, several hundreds of parameters (e.g., acceleration, speed, coordinates, orientation, lane position, road curvature, steering wheel angle, etc.) characterizing the movements or the trajectory of devices within the traffic environment ENV. Such input information may also include information related to the traffic environment ENV itself, such as meteorological conditions, seasonal information, time of the day, potential traffic interruption, deviation, obstacles within the road environment ENV, for example due to road maintenance MNT within the traffic environment ENV. Thus, the plurality of initial acquisitions collected by the distant server SER may differ from each other, depending on the device generating each initial acquisition, on the road scenario encountered by such device within the traffic environment ENV and/or on the road path taken by such device for example. Each initial acquisition may also be associated to parameters of acquisition including headings, a timestamp, meteorological conditions of acquisition, type of device, size of the traffic environment ENV and/or any other parameter characterizing the conditions of acquisition of such initial acquisition. Such initial acquisitions as well as the aforementioned parameters of acquisition may form a training set of trajectories within the traffic environment ENV.

At a step 510, the distant server SER may be configured to transform the initial acquisitions acquired at step 500 (in a time domain) within the traffic environment ENV into one or several representation vectors (in a representation domain). To that end, such step 510 may notably include a dimensionality reduction process. The distant server SER may for example perform a principal component analysis (or PCA), a functional principal component analysis (or FPCA) or more generally a basis expansion using basis functions on the initial acquisitions. The resulting representation vectors corresponding to the initial acquisitions may notably be obtained using a Discrete Fourier Transform basis, a B-spline function basis, a Karhunen-Loeve function basis or a Discrete Cosine Transform for example.

At a step 520, the distant server SER may determine, based on the basis expansion performed at step 510 from the time domain to the representation domain, at least one initial distribution and/or an initial estimate $M_i$ describing at least one initial representation vector *a* associated to the traffic environment ENV. In particular, such initial distribution and/or such initial representation vector *a* reflects an initial time-based (or trajectory) signal *x* associated to the traffic environment ENV. Such initial distribution is notably estimated and/or predicted as the representation of a typical trajectory signal followed by a device or a vehicle within the traffic environment ENV and is thus not based on fused actual observations of a trajectory signal within the traffic environment ENV. In other words, the initial representation vector *a* may be estimated and/or predicted by the distant server SER based on the representation vectors obtained at step 510. Such estimation and/or prediction may be performed by a learning algorithm performed on the representation vectors obtained at step 510.

In an embodiment, the distant server SER may determine several initial distributions associated to distinct set of parameters, such several initial distributions being understood as clusters resulting from the training of the representation vectors obtained at step 510 (and equivalently, of the training of the training set in the time domain).

In particular, the initial trajectory signal *x* associated to the initial distribution obtained at step 520 may be expressed using a function basis *B* as the following:

$$\hat{x}(k) = \sum_{i=1}^{N} a_i B_i[k] = (a^T B)(k)$$

where:

- $\hat{x}$ is the basis expansion of the initial trajectory signal,
- $a = (a_1, a_2, \ldots a_{iN})^T$ is the initial representation vector,

- $B = (B_1[k], B_2[k] ..., B_N[k])$ is a vector comprising components of the function basis,
- k is a discrete time variable, and
- N is an expansion dimension.

Moreover, at step 520, the distant server SER may select $n < N$ principal components of the basis expansion $\hat{x}$ of the initial trajectory signal, such $n$ principal components being considered as representing the main variations of the initial trajectory signal. In other words, the basis expansion of the initial trajectory signal may have a reduced dimension as:

$$\hat{x}(k) \approx \sum_{i=1}^{n} a_i B_i[k] = (a^T B)(k)$$

with $n$ being a representation dimension.

In particular, such basis expansion of dimension $n$ of the initial time-based signal $x$ is performed by the distant server SER so as to satisfy:

$$\mathbb{E}_{x \sim D}(max_k|x(k) - \hat{x}(k)|) < E_r$$

where:

- $\mathbb{E}$ is the expected value of the $max_k$ variable,

- $x$ is the initial time-based signal,

- $D$ is a distribution generating at least part of the initial time-based signal,

- $\hat{x}$ is the basis expansion of the initial time-based signal,

- k is the discrete time variable, and

- $E_r$ is the preset tolerated approximation error.

The preset tolerated approximation error $E_r$, the representation dimension $n$, the function basis $B$ may notably be preconfigured, preset and/or predefined by the distant server SER.

Thus, at step 520, the distant server SER is able to determine an initial representation vector $a$ representing a typical trajectory signal $x$ of a device within the traffic environment ENV. The distant server SER may also determine an initial distribution describing such initial representation vector $a$. Such initial distribution may for example be defined by a mean and a covariance.

At a step 530, the distant server SER may transmit traffic information to a plurality of vehicular equipment EQT, EQR1, EQR2. In particular, such traffic information may include data derived from the initial representation vector $a$ and/or from the initial distribution describing such initial representation vector $a$. For example, such data may include a covariance matrix and a mean vector associated to the initial representation vector $a$, a mean and a covariance of the initial distribution and/or the initial estimate $M_i$ associated to the initial distribution. The traffic information may also include data related to the function basis $B$ to be used for performing the basis expansion, such data including for example the representation dimension $n$, the basis functions $B_1, B_2, ... , B_n$. In particular, the initial representation vector $a$ and/or to the initial distribution may be associated to a specific environment - such as the traffic environment ENV - and/or to specific conditions (e.g., time-related, season-related, climate-related). Thus, the traffic information may include information about different sections of traffic (e.g., different districts, different highways...) having distinct initial representation vectors $a$ and/or initial distributions. In the context of the present disclosure, only the traffic environment ENV and the at least one initial representation vector $a$ and/or to the initial distribution associated to such traffic environment ENV are described. At such step 530, the distant server SER may transmit the traffic information to a plurality of vehicular equipment via a broadcast or a groupcast, for example using the V2X communication. In such case, the distant server SER may transmit such traffic information when the Channel Busy Ratio (or CBR) is below a predefined congestion threshold for example. In other words, the traffic information may thus be transmitted when the V2X communication channels are considered not overly congested. Considering the present context of the disclosure, such traffic information may be transmitted when the vehicular equipment belongs to the traffic environment ENV or beforehand. In an embodiment, the traffic information may also be transmitted to vehicular equipment via wired or wireless means, via a synchronization process when such equipment are plugged in to a source of energy, when such equipment proceed to an enrolment to and/or an update of a road navigation service managing the distant server SER for example. One exemplary realization could be synchronization, either via wired or wireless Internet connection.

For a traffic environment ENV comprising around 1000 kilometers of road, traffic information related to such traffic environment ENV may for example have a size of 64 megabytes (MB).

In an embodiment of the present disclosure, the broadcasting method may be repeated by the distant server SER, for example when further plurality acquisitions are collected by the distant server SER and leads to updated representation vectors and/or distributions learnt from such acquisitions. In such case, updated - and thus improved - predictions performed by the distant server SER may be transmitted by the distant server SER.

It is now referred to figure 6. Figure 6 represents two graphs (a) and (b). Graph (a) on the left side of figure 6 illustrates trajectory signals of a device - for example of the transmitting equipment EQT - in a time domain within the traffic environment ENV. Graph (b) on the right side of figure 6 illustrates a representation of such trajectory signals in a representation domain. Such representation domain may for example be based on the two first principal components $a_1$, $a_2$ of the basis extension (e.g., via a functional principal component analysis or FPCA) of a trajectory signal of the device.

Referring to graph (a), two time-based signals, also referred to as trajectory signals, $x$, $x^*$ are represented. Such trajectory signals $x$, $x^*$ may be expressed in a coordinate $X$, in kilometers, meters, feet or miles in function of time $T$. An initial trajectory signal $x$ is illustrated by a dotted line. Such initial trajectory signal $x$ may for example be obtained based on a learning of a set of initial acquisitions collected by a distant server SER, as aforementioned. An updated trajectory signal $x^*$ is illustrated by a full line. Such updated trajectory signal $x^*$ may for example be determined by the transmitting equipment EQT based on a set of updated acquisitions collected by the transmitting equipment EQT.

Referring to graph (b), a confidence ellipse and estimates $M_i$, $M_{u,T1}$, $M_{u,T2}$ are represented. The confidence ellipse may be associated to a mean function of the initial representation vector $a = (a_1, a_2 ...)$ associated to the initial trajectory signal $x$. An initial estimate $M_i$ is represented. Such initial estimate $M_i$ may for example be determined based on the initial trajectory signal $x$ as determined at an initial time $Ti$, for example as a Maximum A-Posteriori - MAP - estimate. First and second updated estimates $M_{u,T1}$, $M_{u,T2}$ are represented. Such updated estimates $M_{u,T1}$, $M_{u,T2}$ may for example be determined based on different set of updated acquisitions of the updated trajectory signal $x^*$, that is, at distinct first and second times $T1$, $T2$.

At the initial time $Ti$, an initial trajectory signal $x$ is predicted to match a trajectory of the transmitting equipment EQT within the traffic environment ENV. Such initial trajectory signal $x$ is thus a prediction (and not an observation) of the path to be taken by the transmitting equipment EQT. Such initial trajectory signal $x$ is represented on graph (b) as the initial estimate $M_i$, such initial estimate $M_i$ corresponding to the mean of the initial distribution describing the initial representation vector $a$. At such initial time $Ti$, the transmitting equipment EQT also actually moves within the traffic environment ENV and thus starts to form an actual (also referred to as updated) trajectory signal $x^*$.

At a first time $T1$, the transmitting equipment EQT has moved within the traffic environment ENV according to its actual trajectory signal $x^*$, so as to lead to a first set of updated acquisitions. Such first set of updated acquisitions is notably represented on graph (b) as a first updated estimate $M_{u,T1}$, distinct from the initial estimate $M_i$. At such first time $T1$, a difference between the actual trajectory signal $x^*$ and the initial trajectory signal $x$ exists, yet such difference is considered unsignificant as it is below a predefined threshold $ths$, as represented on graph (a). Equivalently, the deviation gap related to a difference between the initial estimate $M_i$ - or equivalently the initial representation vector $a$ - and the first updated estimate $M_{u,T1}$ - or equivalently a first updated representation vector - is below the predefined deviation threshold THS. Thus, at first time $T1$, it is considered that the prediction of the trajectory of the transmitting equipment EQT via the initial trajectory signal $x$ remains relevant. No information message is sent by the transmitting equipment EQT at such first time $T1$.

At a second time $T2$, the transmitting equipment EQT has moved further within the traffic environment ENV according to its actual trajectory signal $x^*$, so as to lead to a second set of updated acquisitions. Such second set of updated acquisitions is notably represented on graph (b) as a second updated estimate $M_{u,T2}$, distinct from both the first updated estimate $M_{u,T1}$ and the initial estimate $M_i$. At such second time $T2$, a difference between the actual trajectory signal $x^*$ and the initial trajectory signal $x$ exists, plus such difference is considered significant as it exceeds the predefined threshold ths, as represented on graph (a). Equivalently, the deviation gap related to a difference between the initial estimate $M_i$ - or equivalently the initial representation vector $a$ - and the second updated estimate $M_{u,T2}$ - or equivalently a second updated representation vector- exceeds the predefined deviation threshold. Thus, at second time $T2$, it is considered that the prediction of the trajectory of the transmitting equipment EQT via the initial trajectory signal $x$ is not relevant anymore, as the actual trajectory signal $x^*$ significantly diverge from the initial trajectory signal $x$. Thus, an information message may be sent by the transmitting equipment EQT at such second time $T2$, so as to provide other receiving equipment EQR1, EQR2 - which still rely on the initial trajectory signal $x$ to localize the transmitting equipment EQT within the traffic environment ENV - with quantized information to estimate the deviation gap and thus an updated trajectory signal of the transmitting equipment EQT.

It is now referred to figure 7. Figure 7 illustrates codewords *C,* also referred to as quantization steps, as considered by the transmitting equipment EQT for transmitting quantized information to the receiving equipment EQR1 via an information message. As illustrated by figure 7, the representation domain may be subdivided into a plurality of codewords *C* having a same diameter parameter equalizing the preset quantization error tolerance $E_q$. The number of codewords *C* used to code the data related to the deviation gap may notably be expressed as:

$$N_{symbols} \approx \ log_2(r_q) + \ log_2(N_c)$$

where:

- $N_{symbols}$ is the number of symbols used to code the data related to the deviation gap $\delta$,

- $r_q$ is the quantized radial parameter of the deviation gap $\delta$, and

- $N_c$ is the number of angular codewords associated with the deviation gap $\delta$.

In particular, an initial codeword $C_{1.1}$ may be defined based on the initial estimate $M_i$ and the diameter parameter. Based on such definition of the codewords *C,* an updated estimate - for example the first updated estimate $M_{u,T1}$ of figure 6 - may be considered approximately similar to the initial estimate $M_i$ when both estimates $M_i$, $M_{u,T1}$ belong to the same codeword, here the initial codeword $C_{1.1}$. Figure 7 further represents an updated estimate $M_u$, which may for example correspond to the second updated estimate $M_{u,T2}$. Such second updated estimate $M_{u,T2}$ belongs to a different codeword $C_{4.5}$, defined as the fourth codeword on a radial coordinate and the fifth codeword on an angular coordinate. The identifiers of such updated codeword $C_{4.5}$ may then be transmitted to the receiving equipment EQR1 as a content of an information message, such identifiers (4;5) pointing out to a transmitted estimate $M_t$ corresponding to the centroid point of such updated codeword $C_{4.5}$. Thus, a receiving equipment EQR1 being provided with such identifiers (4;5) may be able to update its updated estimate as $M_t$, which satisfies the quantization error tolerance $E_q$, and thus satisfies the condition that the deviation gap $\delta$ is below the preset deviation threshold THS.

**Claims**

1. A transmission method performed by a first equipment for transmitting an information message to at least a second equipment in a traffic environment, the first equipment and the second equipment having access to data derived from an initial distribution of an initial time-based signal associated to the traffic environment,
the transmission method comprising steps of:

   obtaining an updated distribution of an updated time-based signal, said updated distribution being related to updated acquisitions of the updated time-based signal collected by the first equipment in the traffic environment,
   determining a deviation gap related to a gap between the data derived from the initial distribution and data derived from the updated distribution,
   if the deviation gap exceeds a predefined deviation threshold, transmitting the information message to the second equipment, said information message including at least data related to said deviation gap.

2. The transmission method according to claim 1, the data related to the initial distribution and the data related to the updated distribution being respectively represented as an initial representation vector and an updated representation vector, and wherein the deviation gap relates to a distance between said initial representation vector and said updated representation vector.

3. The transmission method according to claim 2, wherein the initial representation vector and the updated representation vector are respectively derived from the initial time based-signal and the updated time-based signal using a basis expansion, said basis expansion relying on a function basis (*B*) with:

$$\hat{x}(k) = \sum_{i=1}^{N} a_i B_i[k] = (a^T B)(k)$$

and

$$\widehat{x^*}(k) = \sum_{i=1}^{N} a_i^* B_i[k] = (a^{*T} B)(k)$$

where:

- $\hat{x}(k)$ is the basis expansion of the initial time-based signal,
- $x^*(k)$ is the basis expansion of the updated time-based signal,
- $a = (a_1, a_2 ..., a_N)^T$ is the initial representation vector,
- $a^* = (a_1^*, a_2^*,... a_N^*)^T$ is the updated representation vector,
- $B = (B_1[k], B_2[k] ..., B_N[k])$ is a vector comprising components of the function basis,
- $k$ is a discrete time variable, and
- $N$ is a representation dimension.

4. The transmission method according to claim 3, the representation dimension ($N$) being strictly inferior to an original dimension ($n_o$) of the initial time-based signal and the updated time-based signal, and wherein the basis expansion depends on a preset tolerated approximation error ($E_r$) related to a tolerated error of a representation of the time-based signal via the basis expansion, expressed via:

$$\mathbb{E}_{x \sim D}(max_k|x(k) - \hat{x}(k)|) < E_r$$

and

$$\mathbb{E}_{x^* \sim D}(max_k|x^*(k) - \widehat{x^*}(k)|) < E_r$$

where:

- $\mathbb{E}$ is the expected value of the $max_k$ variable,
- $x(k)$ is the initial time-based signal,
- $x^*(k)$ is the updated time-based signal,
- $D$ is a distribution generating at least part of the initial time-based signal and of the updated time-based signal,
- $\hat{x}(k)$ is the basis expansion of the initial time-based signal,
- $x^*(k)$ is the basis expansion of the updated time-based signal,
- $k$ is the discrete time variable, and
- $E_r$ is the preset tolerated approximation error.

5. The transmission method according to any one of the precedent claims, wherein the obtention of the updated distribution includes at least one step among:

determining a Maximum A-Posteriori - MAP - estimate from the updated distribution, and
determining a Minimum Mean Square Error - MMSE - estimate from the updated distribution,

said MAP estimate and/or MMSE estimate being determined using at least one element among at least:

- a Least Square Estimator,
- a Kalman filter,
- an Unscented Kalman Filter,

- an Extended Kalman Filter,
- a Sequential Importance Sampling - SIS - scheme, and
- a Sequential Importance Resampling - SIR - scheme.

6. The transmission method according to claim 2, wherein the deviation gap exceeds the predefined deviation threshold when:

$$\|\delta\|_2 = \sqrt{(a_1 - a_1^*)^2 + (a_2 - a_2^*)^2 + \cdots (a_N - a_N^*)^2} \leq r_{ths}$$

where:

- $\delta$ is the deviation gap,
- $a = (a_1, a_2 ..., a_N)^\mathsf{T}$ is the initial representation vector,
- $a^* = (a_1^*, a_2^*, ... a_N^*)^\mathsf{T}$ is the updated representation vector,
- $r_{ths}$ is a radial threshold,
- $\| \|_2$ is the Euclidean norm.

7. The transmission method according to any one of the precedent claims, wherein the deviation gap is quantized into a finite number of quantization steps, each quantization step corresponding to a unique codeword.

8. The transmission method according to claim 7 taken in combination with claim 3, wherein quantization steps are associated with a predefined diameter parameter corresponding to a preset quantization error tolerance defined by:

$$max_k ||(a^* - a)^T B||_2 \leq E_q$$

where:

- k is the discrete time variable,
- $\| \|_2$ is the Euclidean norm,
- $a^*$ is the updated representation vector,
- $a$ is the initial representation vector,
- $B$ is the function basis vector, and
- $E_q$ is the preset quantization error tolerance.

9. The transmission method according to claim 7 taken in combination with claim 6, wherein the deviation gap exceeds the predefined deviation threshold when data derived from the initial representation vector and data derived from the updated representation vector belong to distinct codewords.

10. The transmission method according to claim 9, data derived from the initial representation vector being associated to an initial codeword and data derived from the updated representation vector being associated to an updated codeword, and wherein the data related to the deviation gap transmitted to the second equipment includes binary digits associated to identifiers of the updated codeword.

11. The transmission method according to claim 7, the deviation gap ($\delta$) including a radial spherical coordinate (r) and angular spherical coordinates ($\phi_i$), and wherein the deviation gap ($\delta$) is associated with quantized parameters expressed as:

$$r_q = \left\lfloor \frac{r}{E_q} \right\rceil$$

and:

$$\phi_{i,q} = \left\lceil \frac{2\pi r_q}{N_c} \times \phi_i \right\rceil$$

where:

- $r_q$ is a quantized radial parameter of the deviation gap ($\delta$),
- $\phi_{i,q}$ is an $i^{th}$ quantized angular component of the deviation gap ($\delta$),
- i is an index being comprised between 1 and a dimension of the deviation gap minus one,
- r is a radial spherical coordinate of the deviation gap ($\delta$), r being expressed as:

$$r = \|\delta\|_2 = \sqrt{\delta_1{}^2 + \delta_2{}^2 + \cdots \delta_n{}^2}$$

- $\delta_1, \dots \delta_n$ are components of the deviation gap ($\delta$),
- $\phi_i$ is the $i^{th}$ angular spherical coordinate of the deviation gap ($\delta$), $\phi_i$ being expressed as:

$$\phi_i = \begin{cases} \arccos\left(\frac{\delta_i}{\|\delta\|_2}\right), \delta_i \geq 0, \\ 2\pi - \arccos\left(\frac{\delta_i}{\|\delta\|_2}\right), \delta_i < 0 \end{cases}$$

- $N_c$ is the number of codewords C associated with the deviation gap ($\delta$) and being expressed as:

$$N_c = \left\lceil \frac{2\pi r_q}{E_q} \right\rceil + 1$$

- $E_q$ is a preset quantization error tolerance.

12. A first equipment configured to transmit an information message to at least a second equipment in a traffic environment according to any one of claims 1 to 11.

13. An updating method performed by a second equipment for updating information in a traffic environment based on at least an information message received from a first equipment, the first equipment and the second equipment having access to data derived from an initial distribution of an initial time-based signal associated to the traffic environment, the updating method comprising steps of:

receiving the information message comprising data related to a deviation gap from the first equipment, said data related to the deviation gap being related to a gap between the data derived from the initial distribution of the initial time-based signal and data derived from an updated distribution, said updated distribution being related to updated acquisitions of an updated time-based signal collected by the first equipment in the traffic environment, based on the received data related to the deviation gap and at least on the data derived from the initial distribution, determining an inferred distribution associated to the updated time-based signal.

14. A second equipment configured to update information in a traffic environment based on at least an information message received from a first equipment according to claim 13.

15. A broadcasting method performed by a server for broadcasting traffic information to a plurality of equipment about at least a traffic environment, said plurality of equipment comprising at least a first equipment and a second equipment, the broadcasting method comprising steps of:

collecting a plurality of initial acquisitions of a plurality of time-based signals associated to at least the traffic environment, based on said plurality of initial acquisitions, determining at least one initial distribution of an initial time-based signal associated to the traffic environment,
broadcasting traffic information to the plurality of equipment, said traffic information comprising at least data deriving from the initial distribution.

TER3

MNT

SER

ENV

TER1

EQT

TER2

EQR1

EQR2

FIG. 1

EP 4 383 760 A1

FIG. 2

OBT TF INF — 300

OBT UPD TJ — 310

DET UPD REP — 320

DET DEV GP — 330

340

KO — DEV GP > THS ?

OK

QZ DEV GP → TSM QZ DEV INF

350

360

## FIG. 3

```
┌─────────────────────┐
│   OBTN TF INFO      │───400
└─────────────────────┘
          │
          ▼
┌ ─ ─ ─ ─ ─ ─ ─ ─ ─ ─ ┐
    OBT PRES EQ        ───410
└ ─ ─ ─ ─ ─ ─ ─ ─ ─ ─ ┘
          │
          ▼
┌─────────────────────┐
│   SEL INIT DIST SGL │───420
└─────────────────────┘
          │
          ▼
┌─────────────────────┐
│   REC QZ DEV CP     │───430
└─────────────────────┘
          │
          ▼
┌─────────────────────┐
│   DET DEV GP        │───440
└─────────────────────┘
          │
          ▼
┌─────────────────────┐
│  ESTM UPD DIST SGL  │───450
└─────────────────────┘
```

# FIG. 4

```
┌─────────────────────┐
│    OBTN SGLS        │───500
└─────────────────────┘
          │
          ▼
┌─────────────────────┐
│    BS EXP           │───510
└─────────────────────┘
          │
          ▼
┌─────────────────────┐
│    LRNG             │───520
└─────────────────────┘
          │
          ▼
┌─────────────────────┐
│   OBTN INIT INFO    │───530
└─────────────────────┘
```

# FIG. 5

(b)

(b)

FIG. 6

EP 4 383 760 A1

FIG. 7

Europäisches
Patentamt

European
Patent Office

Office européen
des brevets

## EUROPEAN SEARCH REPORT

Application Number

**EP 22 30 6821**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Daniel-Maurice Burgstahler T I: "COLLABORATIVE SENSING IN AUTOMOTIVE SCENARIOS, Enhancement of the Vehicular Electronic Horizon through Collaboratively Sensed Knowledge", , 19 June 2017 (2017-06-19), XP055818014, Retrieved from the Internet: URL:https://tuprints.ulb.tu-darmstadt.de/6554/1/DBu_Dissertation_pub.pdf [retrieved on 2021-06-25] * section 7.2. entitled System concept and Specification, pages 93-94; page 91, first paragraph; table 12 in page 99 * ----- | 1-15 | INV. H04W4/06 G08G1/01 H04W4/40 |
| | | | TECHNICAL FIELDS SEARCHED (IPC) |
| | | | H04W G08G |

The present search report has been drawn up for all claims

| Place of search | Date of completion of the search | Examiner |
|---|---|---|
| The Hague | 25 April 2023 | Fokas, Michail |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.......................................................................
& : member of the same patent family, corresponding
   document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Road Safety and Road Efficiency Spectrum Needs in the 5.9 GHz for C-ITS and Cooperative Automated Driving. *CAR 2 CAR Communication Consortium,* 28 February 2020